# EUROPEAN PATENT APPLICATION

(11) **EP 4 851 312 A1**
(43) Date of publication of application: **09.12.2026**
(21) Application number: 25899441.7
(22) Date of filing: 17.12.2025
(51) Int. Cl.: C21D 9/40, C21D 1/42, F16C 33/64, H05B 6/10

(54) **INDUCTION HEATING METHOD AND MANUFACTURING METHOD FOR RING-SHAPED MEMBER, INDUCTION HEATING DEVICE, RING-SHAPED MEMBER, MANUFACTURING METHOD FOR BEARING, BEARING, MANUFACTURING METHOD FOR VEHICLE, AND MANUFACTURING METHOD FOR MECHANICAL DEVICE**

(30) Priority: 24.04.2025 JP 2025072007
(71) Applicant: NSK Ltd., Tokyo 141-8560 (JP)
(72) Inventor: YAMAMOTO, Takahiro, Fujisawa-shi, Kanagawa 251-8501 (JP); HAGIMOTO, Go, Fujisawa-shi, Kanagawa 251-8501 (JP); MABUCHI, Fumiaki, Fujisawa-shi, Kanagawa 251-8501 (JP)
(74) Representative: Grünecker Patent- und Rechtsanwälte PartG mbB
(86) International application number: PCT/JP2025/044114
(87) International publication number: WO 2026/224994

(57) **Abstract**

An induction heating process includes an outside heating process of applying induction heating to a ring-shaped member (30) using an outer coil (19) as an induction coil (18) located radially outward of the ring-shaped member (30) in a state in which there is no substantial coil located radially inward of the ring-shaped member (30) , and an inside heating process of applying induction heating to the ring-shaped member (30) using an inner coil (20) as the induction coil (18) located radially inward of the ring-shaped member (30) in a state in which there is no substantial coil located radially outward of the ring-shaped member (30). At least one of the outside heating process and the inside heating process includes a process of reducing an amount of heating applied to the ring-shaped member (30) by induction heating over time.

## Description

### TECHNICAL FIELD

The present disclosure relates to an induction heating method and a manufacturing method for a ring-shaped member, an induction heating apparatus, a ring-shaped member, a bearing manufacturing method, a bearing, a vehicle manufacturing method, and a mechanical equipment manufacturing method.

Priority is claimed on Japanese Patent Application No. 2025-072007, filed April 24, 2025, the content of which is incorporated herein by reference.

### BACKGROUND ART

For example, a bearing ring of a bearing is subjected to hardening treatment and tempering treatment to improve toughness of a core while ensuring strength and hardness, particularly hardness of a raceway that contacts rolling elements. Both the hardening treatment and the tempering treatment are performed by heating the bearing ring to a target temperature range corresponding to each treatment, holding it for a predetermined time, and then cooling it.

The brochure of PCT International Publication No. 2024/095961 discloses an induction heating method using an induction heating coil located in the vicinity of a ring-shaped member, as a method of heating a ring-shaped member such as a bearing ring or the like. In this type of induction heating method for a ring-shaped member, when current is applied to the induction heating coil, an eddy current is generated in the part of the ring-shaped member that is close to the induction heating coil, causing that part to heat up. The portion of the ring-shaped member that is far from the induction heating coil is heated by heat transfer from the portion heated based on the generation of the eddy current.

### Citation List

### Patent Document

Patent Document 1: Brochure of PCT International Publication No. 2024/095961

### SUMMARY OF INVENTION

### Technical Problem

The present disclosure is directed to provide an induction heating method for a ring-shaped member that can efficiently induce heating of the ring-shaped member while maintaining good quality of the ring-shaped member. In addition, the present disclosure is directed to provide an induction heating method and a manufacturing method for a ring-shaped member, an induction heating apparatus, a ring-shaped member, a bearing manufacturing method, a bearing, a vehicle manufacturing method, and a mechanical equipment manufacturing method that are advantageous for improving quality.

### Solution to Problem

**In** an aspect according to the present invention, a ring-shaped member induction heating method includes an induction heating process of heating a ring-shaped member using an induction coil. The induction heating process includes an outside heating process of applying induction heating to the ring-shaped member using an outer coil as the induction coil located radially outward of the ring-shaped member in a state in which there is no substantial coil located radially inward of the ring-shaped member, and an inside heating process of applying induction heating to the ring-shaped member using an inner coil as the induction coil located radially inward of the ring-shaped member in a state in which there is no substantial coil located radially outward of the ring-shaped member. At least one of the outside heating process and the inside heating process includes a process of reducing an amount of heating applied to the ring-shaped member by induction heating over time.

**In** another aspect according to the present invention, a ring-shaped member induction heating method includes one or more heating processes of inductively heating a ring-shaped member using only an induction heating coil located on at least one side of the ring-shaped member in a heating direction, which is a radial direction or an axial direction, and in at least one single heating process of the one or more heating processes, an amount of induction heating per unit time of the ring-shaped member is decreased stepwise or continuously.

**In** another aspect according to the present invention, a ring-shaped member manufacturing method includes a process of processing a material to form a ring-shaped workpiece, and a process of heat-treating the workpiece using the induction heating method according to any one of claims 1 to 12.

In another aspect according to the present invention, a ring-shaped member is manufactured using the manufacturing method described above.

In another aspect according to the present invention, a bearing manufacturing method includes a process of manufacturing a ring-shaped member of a bearing using the manufacturing method described above, and a process of assembling the bearing using the ring-shaped member.

In another aspect according to the present invention, a bearing is manufactured using the manufacturing method described above.

In another aspect according to the present invention, a mechanical equipment manufacturing method includes manufacturing a bearing using the manufacturing method described above, and assembling the bearing to a device body.

In another aspect according to the present invention, a vehicle manufacturing method includes manufacturing a bearing using the manufacturing method described above, and assembling the bearing to a vehicle main body.

In another aspect according to the present invention, an induction heating apparatus includes a first station in which an outer coil is installed, a second station in which an inner coil is installed, a power supply device configured to supply current to the outer coil and the inner coil, and a control device, wherein in the first station, in a state in which there is no substantial coil located radially inward of the ring-shaped member, induction heating is applied to the ring-shaped member using the outer coil as the induction coil located radially outward of the ring-shaped member, in the second station, induction heating is applied to the ring-shaped member using the inner coil as the induction coil located radially inward of the ring-shaped member in a state in which there is no substantial coil located radially outward of the ring-shaped member, and the control device reduces an amount of heating applied to the ring-shaped member by induction heating over time in at least one of the first station and the second station. Advantageous Effects of Invention

According to the present disclosure, it is possible to perform efficient induction heating of the ring-shaped member while maintaining good quality of the ring-shaped member. According to the present disclosure, it is possible to provide an induction heating method and a manufacturing method for a ring-shaped member, an induction heating apparatus, a ring-shaped member, a bearing manufacturing method, a bearing, a vehicle manufacturing method, and a mechanical equipment manufacturing method that are advantageous for improving quality.

### BRIEF DESCRIPTION OF DRAWINGS

[FIG. 1] FIG. 1 is a cross-sectional view showing an example of a radial rolling bearing including a ring-shaped member (bearing ring).
[FIG. 2] FIG. 2 is a view schematically showing an induction heating apparatus.
[FIG. 3] FIG. 3 is a cross-sectional view showing an example of an aspect of inductively heating an outer ring.
[FIG. 4] FIG. 4 is a view schematically showing an example of a change in amount of induction heating.
[FIG. 5] FIG. 5 is a view schematically showing another example of the change in amount of induction heating.
[FIG. 6] FIG. 6 is a cross-sectional view showing an example of an aspect of inductively heating an inner ring.
[FIG. 7] A portion (A) in FIG. 7 is a view schematically showing a change in amount of induction heating per a unit time of a ring-shaped member, a portion (B) in FIG. 7 is a view schematically showing a change in electric power supplied to an induction heating coil, and a portion (C) in FIG. 7 is a view schematically showing a change in temperature of the ring-shaped member.
[FIG. 8] FIG. 8 is a view corresponding to a left end portion in FIG. 3 of a variant.
[FIG. 9] FIG. 9 is a cross-sectional view showing another example of the aspect of inductively heating the outer ring.
[FIG. 10] FIG. 10 is a view corresponding to a left end portion in FIG. 9 of a variant.
[FIG. 11] FIG. 11 is a cross-sectional view showing the aspect of inductively heating the outer ring.
[FIG. 12] FIG. 12 is a diagram schematically showing a change in temperature of the outer ring when the outer ring is inductively heated.
[FIG. 13] FIG. 13 is a cross-sectional view showing an aspect of inductively heating the ring-shaped member.
[FIG. 14] FIG. 14 is a cross-sectional view showing the aspect of inductively heating the ring-shaped member.
[FIG. 15] FIG. 15 is a cross-sectional view showing the aspect of inductively heating the ring-shaped member.
[FIG. 16] FIG. 16 is a cross-sectional view showing an aspect of inductively heating various shapes of ring-shaped members.
[FIG. 17] FIG. 17 is a schematic configuration view of a motor to which a bearing as a ring-shaped member is applied.
[FIG. 18] FIG. 18 is a view for describing a comparative example.

### DESCRIPTION OF EMBODIMENTS

An embodiment of the present invention will be described with reference to the accompanying drawings.

The applications of the ring-shaped member induction heating method are not particularly limited. For example, the ring-shaped member induction heating method can be applied to various heat treatments such as hardening, tempering, annealing, and normalizing treatments applied to the ring-shaped member.

The types and shapes of the ring-shaped members, which are targets, are not particularly limited, as long as they can be heated by induction heating. For example, as the ring-shaped member, a member with a substantially cylindrical shape, such as an inner ring or outer ring of a radial rolling bearing or a radial sliding bearing, or a member with a substantially hollow circular shape, such as a bearing ring of a thrust rolling bearing or a thrust sliding bearing, can be used. The ring-shaped member is applicable to outer and inner rings of radial cylindrical roller bearings using cylindrical rollers (including needles), and to outer and inner rings of radial conical roller bearings using conical rollers. Alternatively, as the ring-shaped member, an arbitrary member that constitutes mechanical equipment or a vehicle and has a substantially cylindrical or substantially hollow circular shape can be used. Hereinafter, an example in which the ring-shaped member induction heating method is applied to heat treatment of an outer ring 2 of a radial rolling bearing 1 will be described.

### <Radial rolling bearing>

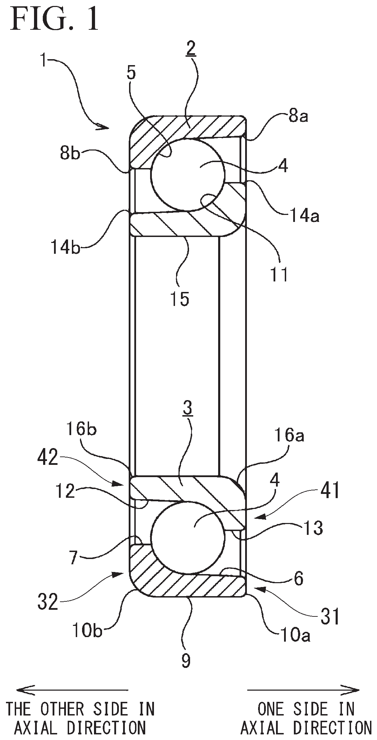

FIG. 1 shows an example of the radial rolling bearing 1 including the outer ring 2, which is a ring-shaped member to which a ring-shaped member induction heating method is applicable. The radial rolling bearing 1 includes the outer ring 2 having an outer ring raceway 5 on an inner circumferential surface thereof, an inner ring 3 having an inner ring raceway 11 on an outer circumferential surface thereof, and a plurality of rolling elements 4 located between the outer ring raceway 5 and the inner ring raceway 11.

In an example, the outer ring 2 and the inner ring 3, each of which is a bearing ring, are made of a hard metal such as bearing steel, carburized steel, or the like. The outer ring 2 and the inner ring 3 can be made of the same metal material, or can be made of different metal materials. The plurality of rolling elements 4 are made of a hard metal such as bearing steel, carburized steel, or the like, or ceramic. In another example, the outer ring 2 and the inner ring 3 are made of different materials.

The outer ring raceway 5 and the inner ring raceway 11 can be configured in a single row or in a double row. The rolling elements 4 in each row can be held movably by retainers (not shown). In the example shown, the outer ring raceway 5 and the inner ring raceway **11** are configured in a single row.

The outer ring raceway 5 and the inner ring raceway **11** have a generic shape corresponding to the shape of the plurality of rolling elements 4. When the plurality of rolling elements 4 are constituted by balls or spherical rollers, the outer ring raceway 5 and the inner ring raceway 11 have an arcuate generatrix shape. When the plurality of rolling elements 4 are constituted by cylindrical rollers (including needles), the outer ring raceway 5 and the inner ring raceway **11** have a linear generatrix shape parallel to their respective central axes. When the plurality of rolling elements 4 are constituted by conical rollers, the outer ring raceway 5 and the inner ring raceway 11 have a linear generatrix shape inclined with respect to their own central axis. In the example shown, since the plurality of rolling elements 4 are constituted by balls, the outer ring raceway 5 and the inner ring raceway 11 have an arcuate generatrix shape.

When the plurality of rolling elements 4 are constituted by balls, the radial rolling bearing 1 can be constituted by a deep groove ball bearing or an angular ball bearing. In the example shown, the radial rolling bearing 1 is constituted by the angular ball bearing. For this reason, the outer ring raceway 5 and the inner ring raceway 11 each have a generatrix shape that is asymmetrical with respect to the axial direction.

Specifically, in the radial rolling bearing 1 shown in FIG. 1, the outer ring 2 and the inner ring 3 have the following configuration.

The outer ring 2 has the angular type outer ring raceway 5 in an axial intermediate portion of the inner circumferential surface. In an example, the outer ring raceway 5 has an approximately 1/4 arcuate generatrix shape, in which an inner diameter increases towards one side in the axial direction (the right side in FIG. 1, a first axial end 31). The outer ring 2 has an inclined conical concave surface portion 6, which is inclined in a direction in which the inner diameter increases toward the first axial end 31, on a portion of the inner circumferential surface adjacent to one side of the outer ring raceway 5 in the axial direction. In addition, the outer ring 2 has a cylindrical surface portion 7 on a portion of the inner circumferential surface, adjacent to the other side of the outer ring raceway 5 in the axial direction (the left side in FIG. 1, a second axial end 32), where the inner diameter does not change with respect to the axial direction. The outer ring 2 has chamfered portions 8a and 8b having an arcuate generatrix shape at end portions on both sides of the inner circumferential surface in the axial direction. The outer ring 2 has a cylindrical surface portion (even surface) 9 in the axial intermediate portion of the outer circumferential surface (outer surface) in which the outer diameter does not change with respect to the axial direction, and chamfered portions 10a and 10b having an arcuate generatrix shape in end portions on both sides of the outer circumferential surface in the axial direction.

That is, the outer ring 2 has a thickness in the radial direction (thickness change, wall structure) that decreases overall towards the first axial end 31 (except for the portion near the second axial end 32, which has the chamfered portion 8b on the inner circumferential surface and the chamfered portion 10b on the outer circumferential surface). The outer circumferential surface (outer surface) of the outer ring 2 has a even surface with relatively small irregularities, and its surface height is relatively uniform with respect to a reference axis along the axial direction. The inner circumferential surface (inner surface) of the outer ring 2 has relatively large irregularities due to the outer ring raceway 5, etc., and the change in surface height with respect to the reference axis along the axial direction is relatively large. The inner circumferential surface of the outer ring 2 includes the outer ring raceway 5, the inclined surface portion 6, the cylindrical surface portion 7, and the like. The outer circumferential surface of the outer ring 2 includes a cylindrical surface portion (even surface) 9 and the like.

The inner ring 3 has the angular type inner ring raceway 11 on the axial intermediate portion of the outer circumferential surface. In an example, the inner ring raceway 11 has an approximately 1/4 arcuate generatrix shape, in which the outer diameter increases towards one side (a first axial end 41) in the axial direction. The inner ring 3 has an inclined conical convex surface portion 12 on a portion of the outer circumferential surface, adjacent to the other side of the inner ring raceway 11 in the axial direction, in a direction in which the outer diameter decreases toward the other side (a second axial end 42) in the axial direction. In addition, the inner ring 3 has a cylindrical surface portion 13 on a portion of the outer circumferential surface, adjacent to one side of the inner ring raceway 11 in the axial direction (the first axial end 41), where the outer diameter does not change with respect to the axial direction. The inner ring 3 has chamfered portions 14a and 14b having an arcuate generatrix shape at the end portions on both sides in the axial direction of the outer circumferential surface. The inner ring 3 has a cylindrical surface portion (even surface) 15 in the axial intermediate portion of the inner circumferential surface (inner surface) in which the inner diameter does not change with respect to the axial direction, and chamfered portions 16a and 16b having an arcuate generatrix shape in the end portions on both sides of the inner circumferential surface in the axial direction.

That is, the inner ring 3 has a radial thickness (thickness change, wall structure) that decreases overall towards the second end portion 42 (excluding a portion in the vicinity of the first end portion 41, which has the chamfered portion 14a on the outer circumferential surface and the chamfered portion 16a on the inner circumferential surface). The inner circumferential surface (inner surface) of the inner ring 3 has a even surface with relatively small irregularities, and its surface height is relatively uniform with respect to the reference axis along the axial direction. The outer circumferential surface (outer surface) of the inner ring 3 has relatively large irregularities due to the inner ring raceway 11, etc., and the change in surface height with respect to the reference axis along the axial direction is relatively large. The outer circumferential surface of the inner ring 3 includes the inner ring raceway 11, the inclined surface portion 12, the cylindrical surface portion 13, and the like. The inner circumferential surface of the inner ring 3 includes a cylindrical surface portion (even surface) 15, and the like.

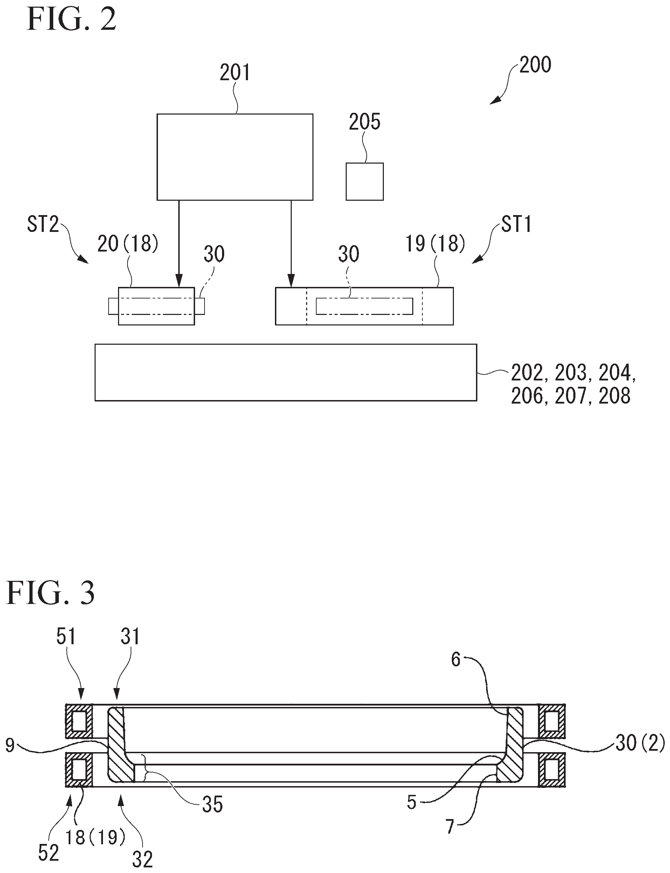

FIG. 2 is a view schematically showing an example of an induction heating apparatus. As shown in FIG. 2, an induction heating apparatus 200 includes an outer coil (first coil, outer side coil, outer diameter-side induction heating coil, outer side induction coil) 19 as an induction coil 18, an inner coil (second coil, inner side coil, inner side induction coil, inner diameter-side induction heating coil) 20 as the induction coil 18, and a power supply device 201 configured to supply high frequency current to the induction coil 18 (the outer coil 19, the inner coil 20). In addition, the induction heating apparatus 200 may include at least one of a support device 202 configured to support a heating target (ring-shaped member, workpiece) 30, a conveying device 203 configured to convey the ring-shaped member 30, a cooling device 204 configured to cool the ring-shaped member 30, a sensor 205 configured to detect a temperature of the ring-shaped member 30, an electrical matching device 206, and a control unit 207. For example, the conveying device 203 conveys the ring-shaped member 30 between a first station ST1 where the outer coil 19 is installed and a second station ST2 where the inner coil 20 is installed. The ring-shaped member 30 is moved from the first station ST1 to the second station ST2. The ring-shaped member 30 is moved from the second station ST2 to the first station ST1.

The induction heating apparatus 200 can independently and individually control the supply output (such as a current value) to the outer coil 19 and the inner coil 20, respectively. In an example, the induction heating apparatus 200 can independently and individually control the timing of supplying current to the outer coil 19 and the timing of supplying current to the inner coil 20. In addition, in an example, the induction heating apparatus 200 can independently and individually control the current value (output value) for the outer coil 19 and the inner coil 20. In addition, in an example, the induction heating apparatus 200 can independently and individually control the output time (heating time) for the outer coil 19 and the inner coil 20. In an example, the induction heating apparatus 200 may include a position control device 208 that independently and individually controls the relative positional relationship between the outer coil 19 and the inner coil 20 and the ring-shaped member 30. Further, the induction heating apparatus 200 may control some of the above-mentioned controls independently.

### <Ring-shaped member induction heating method>

In the following description, unless otherwise specified, "axial direction," "radial direction," and "circumferential direction" refer to the axial direction, radial direction, and circumferential direction of the ring-shaped member 30, which is a target. One side in the axial direction (the first axial ends 31 and 41) refers to an upper side in FIG. 3, and the other side in the axial direction (the second axial ends 32 and 42) refers to a lower side in FIG. 3.

In the embodiment, as shown in FIG. 3, the ring-shaped member induction heating method includes one or more heating processes of inductively heating the ring-shaped member 30 using only an induction heating coil 18 located on either side of the ring-shaped member 30 with respect to the heating direction, which is either the radial or axial direction.

That is, in the heating process, by energizing the induction heating coil 18, which is located on either side of the ring-shaped member 30 with respect to the heating direction, an eddy current is generated in the ring-shaped member 30, thereby inductively heating the ring-shaped member 30. More specifically, in the heating process, when current is applied to the induction heating coil 18, an eddy current is generated in the portion of the ring-shaped member 30 that is close to the induction heating coil 18, that is, the portion on one side in the heating direction, and this portion is heated. The portion of the ring-shaped member 30 that is farther from the induction heating coil 18, that is, the portion on the other side in the heating direction, is heated by heat transfer from the portion heated based on the generation of the eddy current.

When the heating direction is set to the radial direction, the induction heating coil 18 is located either radially outward or radially inward of the ring-shaped member 30. For example, in a state where no substantial coil is located radially inward of the ring-shaped member 30, the induction heating coil 18 is located radially outward of the ring-shaped member 30 (first side or second side). Alternatively, in a state where no substantial coil is located radially outward of the ring-shaped member, the induction heating coil 18 is located radially inward of the ring-shaped member 30 (second side or first side).

When the heating direction is set to the axial direction, the induction heating coil 18 is located on one side of the ring-shaped member 30 in the axial direction or on the other side in the axial direction. For example, one induction heating coil 18 is located at a location (first side or second side) where the axial center of the induction heating coil 18 is shifted to one side in the axial direction relative to the axial center of the ring-shaped member 30. Alternatively, one induction heating coil 18 is located at a location (second side or first side) where the axial center of the induction heating coil 18 is shifted to the other side in the axial direction relative to the axial center of the ring-shaped member 30.

The one or more heating processes may include a first-side heating process in which the ring-shaped member 30 is inductively heated from the first side with respect to the heating direction using only the first induction heating coil 18 located on the first side of the ring-shaped member 30 with respect to the heating direction as the induction heating coil 18, and a second-side heating process in which the ring-shaped member 30 is inductively heated from the second side with respect to the heating direction using only the second induction heating coil located on the second side of the ring-shaped member 30 after the first-side heating process with respect to the heating direction as the induction heating coil 18. Accordingly, this makes it easier to heat the entire ring-shaped member 30 almost uniformly and efficiently. Further, when the heating direction is the radial direction, it is possible to arbitrarily set whether the first side or the second side is the outer (or inner) side in the radial direction. In addition, when the heating direction is the axial direction, it is possible to arbitrarily set whether the first or second side is designated as one side in the axial direction (or the other side in the axial direction).

In addition, the one or more heating processes may include a reheating process after the second-side heating process, in which the ring-shaped member 30 is again inductively heated from the first side with respect to the heating direction, using only a reheating induction heating coil as the induction heating coil 18, which is located on the first side of the ring-shaped member 30 with respect to the heating direction. Accordingly, the entire ring-shaped member 30 can be heated more reliably and almost uniformly. That is, after performing the first-side heating process and the second-side heating process in that order, the reheating process is performed on the ring-shaped member 30 by induction heating from the first side in the heating direction, and therefore, even if the temperature of the first side portion of the ring-shaped member 30 decreases in the heating direction during the conveyance from the first-side heating process to the second-side heating process, the temperature of that portion can be raised to the target temperature range by reheating it, and the temperature of the entire ring-shaped member 30 can be adjusted to be nearly uniform.

In each of the one or more heating processes, when inductively heating the ring-shaped member 30 using only the induction heating coil 18 located on one side of the ring-shaped member 30 with respect to the heating direction, it is preferable not to place another induction heating coil on the other side of the ring-shaped member 30 with respect to the heating direction. That is, if such an additional induction heating coil is present, even if the additional induction heating coil is not energized, current may flow through the other induction heating coil also due to electromagnetic induction when the induction heating coil 18 is energized. If the other side portion of the ring-shaped member 30 in relation to the heating direction is inadvertently heated, it becomes difficult to stably control the heating condition. If no other induction heating coil is present, the heating condition in the heating process can be stably controlled.

The ring-shaped member induction heating method reduces the amount of induction heating per unit time of the ring-shaped member 30 stepwise or continuously in at least one of the one or more heating processes.

The operation to stepwise or continuously reduce the amount of induction heating per unit time of the ring-shaped member 30 can be performed in at least a portion of the time zone in at least one heating process. That is, this operation may be carried out throughout the entire time zone of at least one heating process, or it may be carried out only during a portion of the time zone of at least one heating process.

If the operation to stepwise or continuously reduce the amount of induction heating per unit time of the ring-shaped member 30 is performed only in a portion of the time zone of the at least one heating process, then the amount of induction heating per unit time of the ring-shaped member 30 can also be increased in time zones outside of that portion, for example, in the time zones of the starting stage or final stage of the at least one heating process.

In an example, the induction heating process includes an outside heating process that applies induction heating to the ring-shaped member 30 using an outer coil, which is the induction coil 18, located radially outward of the ring-shaped member 30, in a state in which there is no substantial coil located radially inward of the ring-shaped member 30 and an inside heating process that applies induction heating to the ring-shaped member 30 using an inner coil, which is the induction coil 18, located radially inward of the ring-shaped member 30, in a state in which there is no substantial coil located radially outward of the ring-shaped member 30. For example, the outside heating process is performed first, followed by the inside heating process. Alternatively, the inside heating process is performed first, followed by the outside heating process. In addition, the induction heating process may further include a conveying process in which the ring-shaped member 30 is conveyed between the outside heating process and the inside heating process.

In the induction heating process, at least one of the outside heating process and the inside heating process includes a process of reducing the amount of heating applied to the ring-shaped member 30 by the induction heating over time. For example, the process of reducing the amount of heating includes at least one of reducing the amount of heating in one or more stages, and continuously reducing the amount of heating. For example, in the outside heating process, the amount of heating decreases over time, and then, the inside heating process is performed. In this case, in the inside heating process, the amount of heating decreases over time, or the amount of heating does not decrease substantially. Alternatively, in the inside heating process, the amount of heating decreases over time, and then the outside heating process is performed. In this case, in the outside heating process, the amount of heating decreases over time, or the amount of heating does not decrease substantially.

For example, in a single heating process, if the amount of heating per unit time in the initial stage (first amount of heating, large amount of heating, maximum amount of heating) is set to 1, the effective ratio (second amount of heating/first amount of heating) of the amount of heating per unit time in the post stage (subsequent stage) (second amount of heating, small amount of heating, minimum amount of heating) to the first amount of heating can be 0.9, 0.8, 0.7, 0.6, 0.5, 0.4, 0.3, 0.2, 0.1, or less. Alternatively, in a single heating process, if the amount of heating per unit time required to maintain a constant amount of heating for the ring-shaped member 30 is defined as the amount of standard heating, the first amount of heating/amount of standard heating can be 1.1, 1.2, 1.3, 1.4, 1.5, 1.6, 1.7, 1.8, 1.9, or higher. In addition, the second amount of heating/amount of standard heating can be 0.9, 0.8, 0.7, 0.6, 0.5, 0.4, 0.3, 0.2, 0.1, or less.

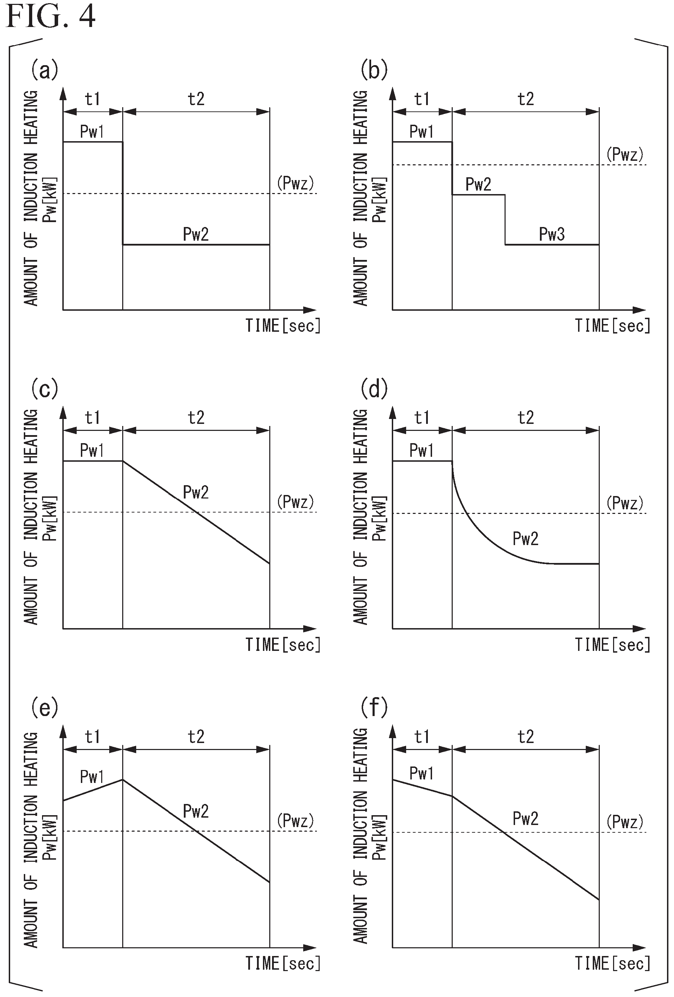

In an example shown in FIG. 4(a), the heating process includes a first period (t1), a second period (t2), and a decreasing step between the first period (t1) and the second period (t2). In the first period (t1), an amount of induction heating Pw1 is greater than an amount of reference heating (for example, an amount of standard heating (Pwz)) and is maintained at a substantially constant level. In the second period (t2), an amount of induction heating Pw2 is smaller than the amount of reference heating (for example, the amount of standard heating (Pwz)) and is maintained at a substantially constant level. In a variant shown in FIG. 4(b), the heating process includes two decreasing steps. In another example, the heating process may include three or more decreasing steps.

In an example shown in FIG. 4(c), the heating process includes a first period in which the amount of heating is constant, and a second period (t2) in which the amount of heating continuously decreases. In the first period (t1), the amount of induction heating (Pw1) is greater than the amount of reference heating (for example, the amount of standard heating (Pwz)) and is maintained at a substantially constant level. The second period (t2) has a process in which the amount of induction heating (Pw2) decreases linearly over time, or a process in which it decreases at a constant proportion with respect to time. For example, at the timing in the middle of the second period (t2), the amount of induction heating (Pw2) becomes smaller than the amount of reference heating. In a variant shown in FIG. 4(d), the second period (t2) has a process in which the amount of induction heating (Pw2) decreases nonlinearly over time, or a process in which it decreases at a non-constant proportion with respect to time (for example, a process in which the rate of decrease becomes smaller over time).

In an example shown in FIG. 4(e), the heating process includes a first period (t1) in which the amount of heating continuously increases, and a second period (t2) in which the amount of heating continuously decreases. The first period (t1) has a process in which the amount of induction heating (Pw1) increases linearly or nonlinearly with respect to time, or a process in which it increases in a constant or non-constant proportion. The second period (t2) has a process in which the amount of induction heating (Pw2) decreases linearly or nonlinearly with respect to time, or a process in which it decreases by a constant or non-constant proportion. For example, throughout the first period (t1), the amount of induction heating (Pw1) is greater than the amount of reference heating (for example, the amount of standard heating (Pwz)). Alternatively, at the timing in the middle of the first period (t1), the amount of induction heating (Pw1) becomes greater than the amount of reference heating. In addition, at the timing in the middle of the second period (t2), the amount of induction heating (Pw2) becomes smaller than the amount of reference heating. In a variant shown in FIG. 4(f), the heating process includes the first period (t1) in which the amount of heating continuously decreases, and the second period (t2) in which the amount of heating continuously decreases, with different rates of decrease between the first period (t1) and the second period (t2). For example, in the first period (t1), the rate of decrease of the amount of induction heating (Pw1) is relatively small, and in the second period (t2), the rate of decrease of the amount of induction heating (Pw2) is relatively large.

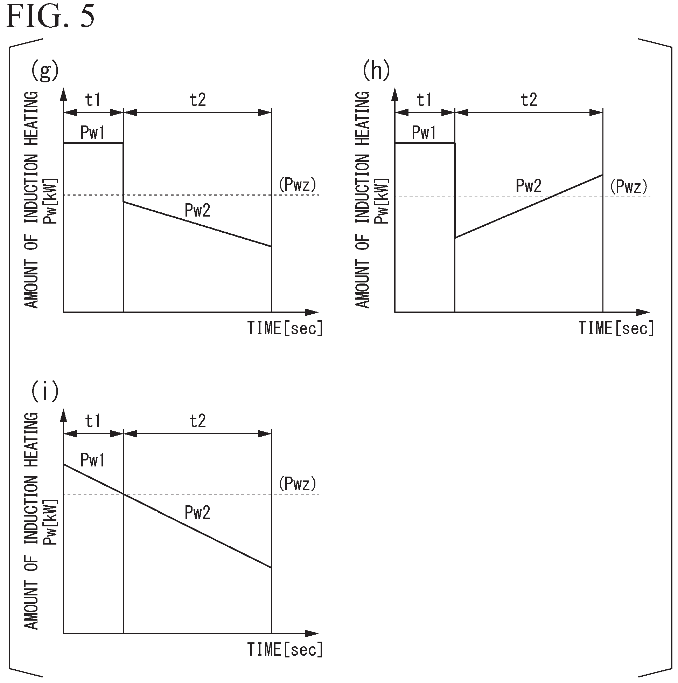

In an example shown in FIG. 5(g), the heating process includes the first period (t1), the second period (t2), and a decreasing step between the first period (t1) and the second period (t2). During the first period (t1), the amount of induction heating Pw1 is greater than the amount of reference heating (for example, the amount of standard heating (Pwz)) and is maintained at a substantially constant level. The second period (t2) has a process in which the amount of induction heating (Pw2) decreases linearly or nonlinearly with respect to time, or a process in which it decreases at a constant or non-constant proportion with respect to time. For example, in the decreasing step, the amount of induction heating becomes smaller than the amount of reference heating. Alternatively, at the timing in the middle of the second period (t2), the amount of induction heating (Pw2) becomes smaller than the amount of reference heating. In a variant shown in FIG. 5(h), the second period (t2) has a process in which the amount of induction heating (Pw2) increases linearly or nonlinearly with respect to time, or a process in which it increases at a constant or non-constant proportion with respect to time. For example, in the decreasing step, the amount of induction heating becomes smaller than the amount of reference heating. Additionally and/or alternatively, at the timing in the middle of the second period (t2), the amount of induction heating (Pw2) becomes greater than the amount of reference heating, or during the second period (t2), the amount of induction heating (Pw2) is smaller than the amount of reference heating.

In an example shown in FIG. 5(i), the heating process has a process in which the amount of heating continuously decreases over both the first period (t1) and the second period (t2). For example, the heating process has a process in which the amount of induction heating decreases linearly or nonlinearly with respect to time, or a process in which it decreases at a constant or non-constant proportion with respect to time. For example, during the first period (t1), the amount of induction heating Pw1 is greater than the amount of reference heating (for example, the amount of standard heating (Pwz)), and during the second period (t2), the amount of induction heating Pw2 is smaller than the amount of reference heating.

With respect to the first period (t1) and the second period (t2), each of the examples shown in FIG. 4 and FIG. 5 can be combined as appropriate and/or partially modified. In each of the examples in FIG. 4 and FIG. 5, the first period (t1) is set to be shorter than the second period (t2). The first period (t1)/the second period (t2) can be 0.9, 0.8, 0.7, 0.6, 0.5, 0.4, 0.3, 0.2, 0.1, or less. Alternatively, the first period (t1) is set to be longer than the second period (t2). The first period (t1)/the second period (t2) can be 1.1, 1.2, 1.3, 1.4, 1.5, 1.6, 1.7, 1.8, 1.9, or more. Alternatively, the first period (t1) can be made to have essentially the same time length as the second period (t2).

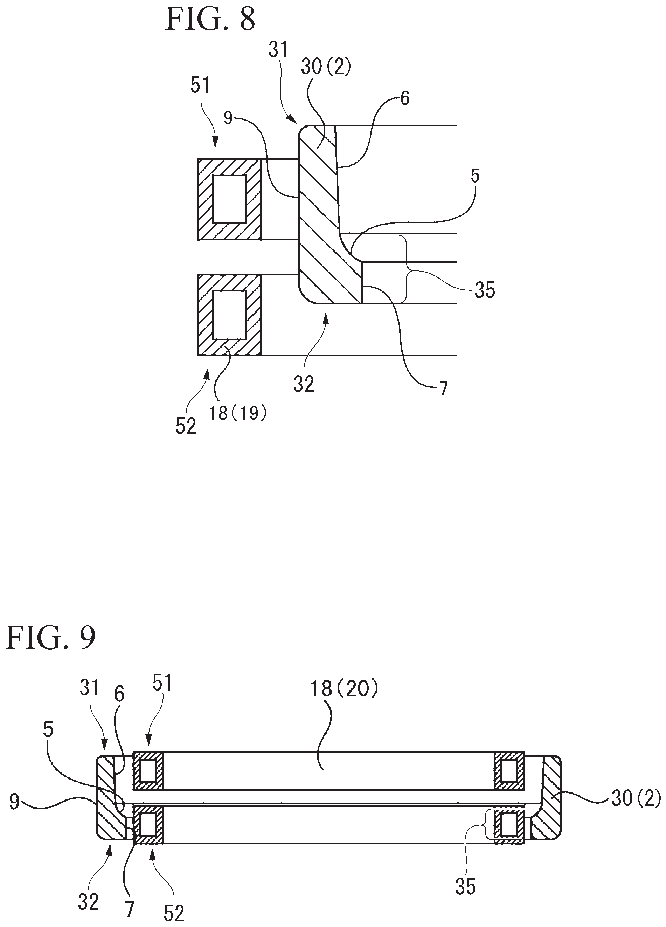

In an example, as shown in FIG. 3, the ring-shaped member 30 (the outer ring 2) has the inner circumferential surfaces (5, 6, 7) where the change in surface height with respect to the reference axis along the axial direction is larger than that of the outer circumferential surface (9). The outside heating process using the outer coil 19 is performed first (FIG. 3), followed by the inside heating process using the inner coil 20 (FIG. 9), and in the outside heating process, the amount of heating decreases over time. If necessary, the amount of heating decreases over time during the internal heating process. In another example, the inside heating process using the inner coil 20 is performed first, followed by the outside heating process using the outer coil 19, and the amount of heating in the inside heating process decreases over time. If necessary, the amount of heating decreases over time even in the external heating process. In an example, the relative positional relationship in the axial direction between the ring-shaped member 30 and the induction coil 18 is substantially the same between the outside heating process and the inside heating process. In another example, the relative positional relationship in the axial direction between the ring-shaped member 30 and the induction coil 18 differs between the outside heating process and the inside heating process. In the outside heating process, a first positional relationship in the axial direction is established between the ring-shaped member 30 and the outer coil 19, and in the inside heating process, a second positional relationship in the axial direction is established between the ring-shaped member 30 and the inner coil 20, and the second positional relationship is different from the first positional relationship.

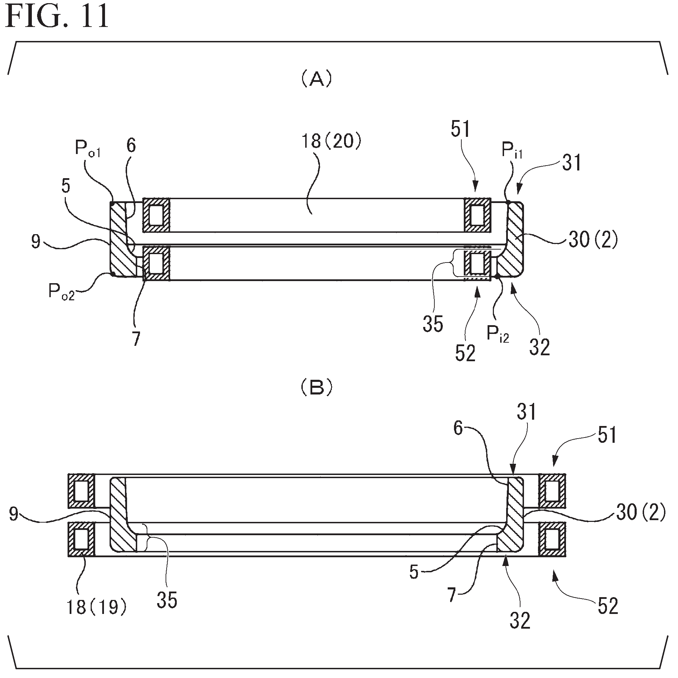

In an example, as shown in FIG. 3, the positional relationship between the induction coil and the ring-shaped member is set such that the axial center position of the ring-shaped member 30 is the same as the center position of the axial effective length of the induction coil 18 (the outer coil 19, the inner coil 20). In another example, as shown in FIG. 8, the positional relationship between the induction coil 18 and the ring-shaped member 30 is set such that the axial center position of the ring-shaped member 30 is different from the center position of the axial effective length of the induction coil 18 (the outer coil 19, the inner coil 20). In an example of FIG. 3 and FIG. 8, the ring-shaped member 30 has a thickness distribution in the circumferential wall that is biased toward the second axial end 32. The ring-shaped member 30 has a convex portion that protrudes radially inward in the vicinity of the second axial end 32. The wall thickness near the second axial end 32 is greater than the wall thickness near the first axial end 31 and the wall thickness of the axial center portion. In FIG. 3, the induction coil 18 is located such that the axial center position of the ring-shaped member 30 is the same as or near the center position of the axial effective length of the induction coil 18 (the outer coil 19, the inner coil 20), and the effective length of the induction coil 18 is greater than a axial length of the ring-shaped member 30. Because the effective length of the induction coil 18 is greater than the axial length of the ring-shaped member 30, a portion of the magnetic field wraps around to the axial end surface of the ring-shaped member 30, thereby expanding the heating region of the ring-shaped member 30 and achieving uniform heating across the entire ring-shaped member 30. In addition, a tolerance level for changes in the relative positional relationship between the induction coil 18 and the ring-shaped member 30 is mitigated. In FIG. 8, depending on the bias of the thickness distribution, the axial center position of the induction coil 18 is shifted and located axially toward the second axial end 32 relative to the axial center position of the ring-shaped member 30. The axial center position of the induction coil 18 is located near the second axial end 32, which has a relatively large thickness. By appropriately controlling the axial position of the induction coil 18, uniform heating can be achieved across the entire ring-shaped member 30, which has surface height and/or thickness changes. These principles can also be applied when the induction coil 18 is located outside the ring-shaped member 30 (see FIG. 11).

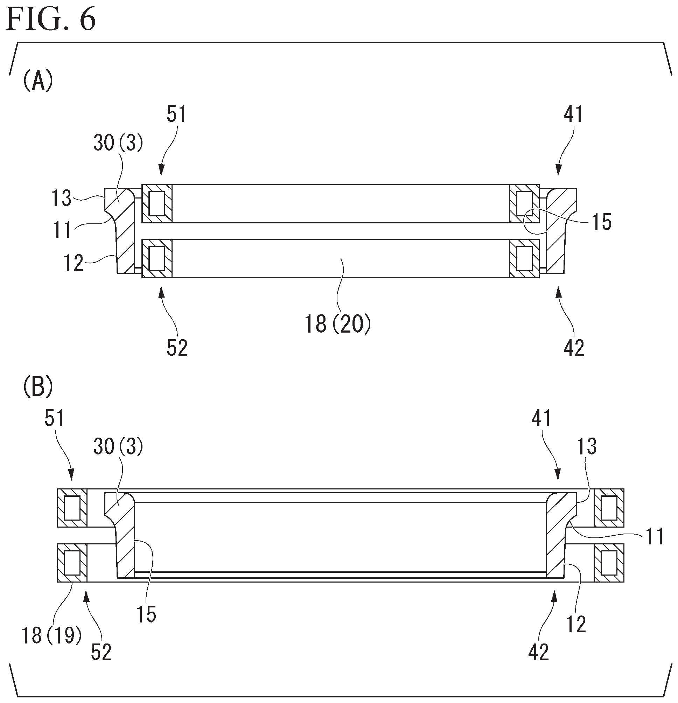

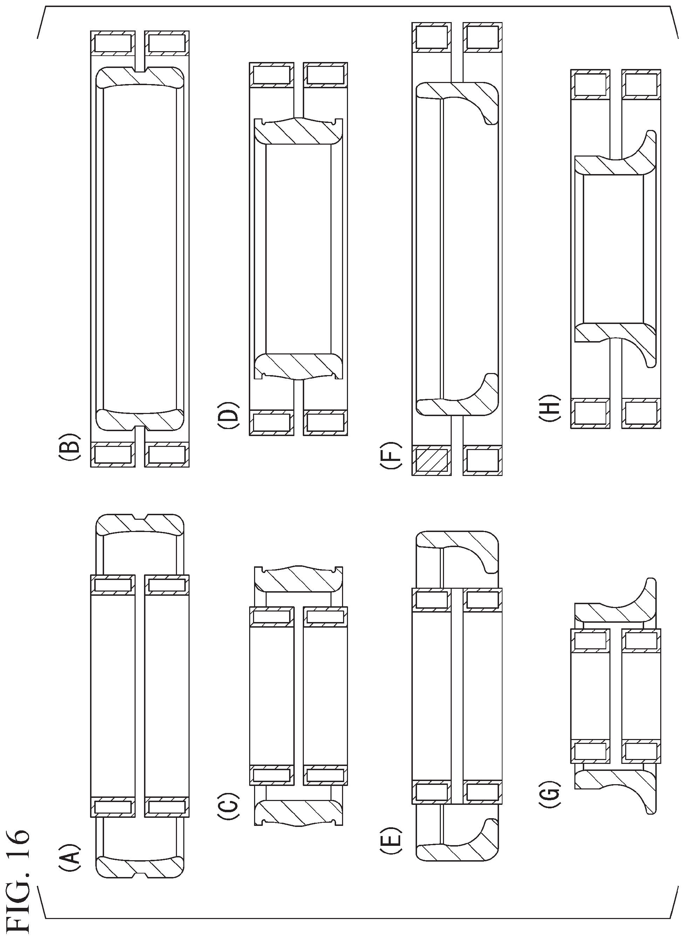

In an example, as shown in FIG. 6, the ring-shaped member 30 (the inner ring 3) has the outer circumferential surfaces (11, 12, 13) where the change in surface height with respect to the reference axis along the axial direction is larger than that of the inner circumferential surface (15). The inside heating process using the inner coil 20 is performed first, followed by the outside heating process using the outer coil 19, and in the inside heating process, the amount of heating decreases over time. If necessary, the amount of heating decreases over time even in the external heating process. In another example, the outside heating process using the outer coil 19 is performed first, followed by the inside heating process using the inner coil 20, and in the outside heating process, the amount of heating decreases over time. If necessary, the amount of heating decreases over time during the internal heating process. In an example, the relative positional relationship in the axial direction between the ring-shaped member 30 and the induction coil 18 is substantially the same between the outside heating process and the inside heating process. In another example, the relative positional relationship in the axial direction between the ring-shaped member 30 and the induction coil 18 differs between the outside heating process and the inside heating process. During the inside heating process, a second positional relationship in the axial direction is established between the ring-shaped member 30 and the inner coil 20, and during the outside heating process, a first positional relationship in the axial direction is established between the ring-shaped member 30 and the outer coil 19. The first positional relationship is different from the second positional relationship.

In the example of FIG. 6, the ring-shaped member 30 has a thickness distribution of the circumferential wall that is biased toward the first axial end 41. The ring-shaped member 30 has a convex portion that protrudes outward in the radial direction near the first axial end 41. The wall thickness near the first axial end 41 is greater than the wall thickness near the second axial end 42 and the wall thickness of the axial center portion. In FIG. 6, the induction coil 18 is located such that the axial center position of the ring-shaped member 30 is the same as or near the center position of the axial effective length of the induction coil 18 (the outer coil 19, the inner coil 20), and the effective length of the induction coil 18 is greater than the axial length of the ring-shaped member 30. Because the effective length of the induction coil 18 is greater than the axial length of the ring-shaped member 30, a portion of the magnetic field wraps around to the axial end surface of the ring-shaped member 30, thereby expanding the heating region of the ring-shaped member 30 and achieving uniform heating across the entire ring-shaped member 30. In addition, the tolerance level for changes in the relative positional relationship between the induction coil 18 and the ring-shaped member 30 is mitigated. In another example, depending on the bias of the thickness distribution, the axial center position of the induction coil 18 is shifted and located axially toward the first axial end 41 relative to the axial center position of the ring-shaped member 30. The axial center position of the induction coil 18 is located near the first axial end 41, which has a relatively large thickness. By appropriately controlling the axial position of the induction coil 18, uniform heating can be achieved across the entire ring-shaped member 30, which has surface height and/or thickness changes. These principles can also be applied when the induction coil 18 is located inside the ring-shaped member 30.

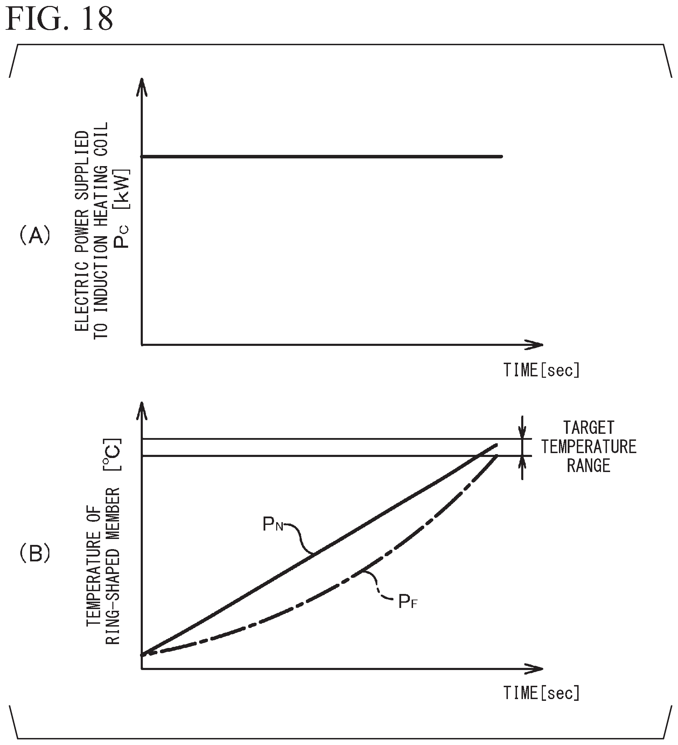

FIG. 18 is a view for describing a comparative example. In the comparative example, during the induction heating process of the ring-shaped member, the amount of induction heating per unit time of the ring-shaped member is kept constant. Specifically, while maintaining a constant interval between the induction heating coil and the ring-shaped member, electric power Pc supplied to the induction heating coil is kept constant as shown in FIG. 18(A). The amount of induction heating per unit time for the ring-shaped member refers to the amount of thermal energy per unit time supplied to the ring-shaped member by the induction heating.

As described above, during the induction heating process of the ring-shaped member, if the amount of induction heating per unit time of the ring-shaped member is kept constant, a temperature of a portion P_{N} in the ring-shaped member, which is closest to the induction heating coil, and a temperature of the portion P_{F} in the ring-shaped member, which is furthest from the induction heating coil, change as schematically shown in FIG. 18(B). That is, in the ring-shaped member, the temperature of the portion P_{N}, which is closest to the induction heating coil, rises first, almost proportionally, while, in the ring-shaped member, the temperature of the portion P_{F}, which is furthest from the induction heating coil, rises later (for example, exponentially).

When applying heat treatments such as hardening treatment and tempering treatment to the ring-shaped member, one approach to shorten the time it takes for the temperatures of the respective portions P_{N} and P_{F} to reach the target temperature range is to set a large amount of induction heating (constant value) per unit time of the ring-shaped member. However, if the amount of induction heating per unit time of the ring-shaped member is made too large, the temperature of the portion P_{N} in the ring-shaped member closest to the induction heating coil will rise excessively, exceeding the target temperature range. This can lead to deterioration of the surface quality, or damage such as cracking, deformation, and the like. To avoid this, shortening the heating time may prevent the temperature of portion P_{F} from reaching the target temperature range.

In an example of the induction heating method using the induction heating apparatus 200 shown in FIG. 2, the amount of induction heating per unit time of the ring-shaped member 30 is stepwise or continuously reduced in at least one heating process of the first-side heating process and the second-side heating process. For example, in a first half of the time zone of one heating process, the amount of induction heating per unit time of the ring-shaped member 30 is made greater than the amount of standard heating (for example, as in the ring-shaped member induction heating method of the comparative example, where the amount of induction heating per unit time of the ring-shaped member is kept constant during the process of inductively heating the ring-shaped member). Meanwhile, in a second half of the time zone of the heating process, the amount of induction heating per unit time of the ring-shaped member 30 is made smaller than the amount of standard heating (for example, as in the ring-shaped member induction heating method of the comparative example, where the amount of induction heating per unit time of the ring-shaped member is kept constant during the process of inductively heating the ring-shaped member).

In the first half of the time zone of the heating process, by increasing the amount of induction heating per unit time of the ring-shaped member 30, it is possible to promote the temperature rise of the portion of the ring-shaped member 30 that is close in distance to the induction heating coil 18, i.e., the portion that is heated by the generation of eddy current. In other words, the temperature rise of the portion heated due to the generation of eddy current can be made more rapid compared to a constant heating method like the comparative example. Accordingly, a temperature difference between the portion of the ring-shaped member 30 that is close to the induction heating coil 18 and the portion of the ring-shaped member 30 that is farther from the induction heating coil 18 becomes larger. According to Fourier's law, the amount of heat transferred per unit time from the closer portion to the farther portion increases, thus promoting the temperature rise in the farther portion. In addition, in the second half of the time zone of the heating process, by reducing the amount of induction heating per unit time of the ring-shaped member 30, it is possible to efficiently raise the temperature of the entire ring-shaped member 30 toward the target temperature range while preventing the closer portion from being overheated.

As a result, the time it takes for the entire ring-shaped member 30 to reach the target temperature range is reduced. In addition, this prevents excessive heating of the portion of the ring-shaped member 30 that is close to the induction heating coil 18, thereby preventing deterioration of the surface quality or damage such as cracking and deformation, and maintaining good quality.

The method for stepwise or continuously reducing the amount of induction heating per unit time of the ring-shaped member 30 is not particularly limited, and any arbitrary method can be employed. In an example, the process of reducing the amount of heating may include controlling at least one of the current, the voltage, and the positional relationship between the induction coil 18 and the ring-shaped member 30.

For example, by controlling the electric power supplied to the induction heating coil 18, specifically by reducing at least one of the voltage applied to the induction heating coil 18 and the current flowing through the induction heating coil 18, the amount of induction heating per unit time of the ring-shaped member 30 can be reduced stepwise or continuously. Alternatively, by increasing the interval (distance) between the ring-shaped member 30 and the induction heating coil 18, the amount of induction heating per unit time of the ring-shaped member 30 can be stepwise or continuously reduced.

In an example, by increasing the interval between the ring-shaped member 30 and the induction heating coil 18, the amount of induction heating per unit time of the ring-shaped member 30 can be stepwise or continuously reduced. For example, when the induction heating coil 18 is located radially outward or radially inward of the ring-shaped member 30, the induction heating coil 18 is located at one or more locations in the circumferential direction radially outward or radially inward of the ring-shaped member 30, and its position in the radial direction can be changed, and the position in the radial direction of the induction heating coil 18 is changed. By increasing the radial interval between the ring-shaped member 30 and the induction heating coil 18, the amount of induction heating per unit time of the ring-shaped member 30 can be stepwise or continuously reduced. Alternatively, the induction heating coil 18 may be used, having different coil diameters (effective diameters) along the axial direction. For example, in the induction heating coil 18, the coil diameter changes stepwise and/or continuously along the axial direction. In this configuration, moving the ring-shaped member 30 in the axial direction relative to the induction heating coil 18 changes the positional relationship (radial interval) between the induction coil 18 and the ring-shaped member 30.

In an example, by moving the ring-shaped member 30 in the axial direction relative to the induction heating coil 18, the axial center position of the induction heating coil 18 with respect to the axial center of the ring-shaped member 30 changes. For example, by changing the relative positional relationship in the axial direction between the ring-shaped member 30 and the induction heating coil 18, the heating amount distribution in the axial direction relative to the ring-shaped member 30 changes. As a result, the amount of induction heating per unit time of the ring-shaped member 30 can be stepwise or continuously reduced. Alternatively, when the induction heating coil 18 is located on one side in the axial direction or on the other side in the axial direction of the ring-shaped member 30, the amount of induction heating per unit time of the ring-shaped member 30 can be stepwise or continuously reduced by increasing the axial interval between the ring-shaped member 30 and the induction heating coil 18.

In the at least one heating process, the aspect that reduces the amount of induction heating per unit time of the ring-shaped member 30 may be a stepwise decreasing aspect only, a continuously decreasing aspect only, or a combination of the stepwise decreasing aspect and the continuously decreasing aspect. In addition, for the stepwise decreasing aspect, the number of times the stepwise decrease occurs can be set arbitrarily.

Next, an example in which the ring-shaped member induction heating method is applied to the hardening treatment and tempering treatment when manufacturing the outer ring 2 of the radial rolling bearing 1 shown in FIG. 1 will be described. In this case, the outer ring 2 is employed as the ring-shaped member 30 that becomes a target. In addition, as one or more heating processes, the induction heating process includes one heating process. Further, the heating direction is defined as the radial direction of the ring-shaped member 30 (the outer ring 2), and in the heating process, the induction heating coil 18 is located radially outward of the ring-shaped member 30 (the outer ring 2). These points will be explained in more detail below.

When manufacturing the outer ring 2, first, the metal material is forged to form the rough shape of the outer ring 2, and then, turning is performed to refine the shape and form the outer ring raceway 5. Next, the outer ring 2 is subjected to the hardening treatment and the tempering treatment. Both the hardening treatment and the tempering treatment are performed by heating the outer ring 2 to the hardening temperature or tempering temperature of the hard metal constituting the outer ring 2, holding it for a predetermined time, and then cooling it.

For example, in the hardening treatment of the outer ring 2, the outer ring 2 is heated to an appropriate target temperature range as the hardening temperature of the hard metal. Then, after maintaining the temperature of the outer ring 2 within the target temperature range for approximately 1 to 30 seconds, it is rapidly cooled to room temperature by methods such as oil cooling, which involves immersion in quenching oil. The numerical values and procedures mentioned above are examples only and are not limited thereto.

For example, in the tempering treatment of the outer ring 2, the outer ring 2 is heated to an appropriate target temperature range as the tempering temperature of the hard metal. Then, the temperature of the outer ring 2 is maintained within the target temperature range for approximately 1 to 30 seconds, and then allowed to cool naturally to room temperature. The numerical values and procedures mentioned above are examples only and are not limited thereto.

After the hardening and tempering treatments are applied to the outer ring 2, finishing processing such as grinding is applied to the outer ring raceway 5 to complete the outer ring 2.

In the hardening treatment and the tempering treatment, heating of the outer ring 2 is performed by induction heating of the outer ring 2 using the induction heating coil 18.

In an example, an induction heating apparatus for implementing a ring-shaped member induction heating method includes an outer coil (outer diameter-side induction heating coil) 19 as the induction heating coil 18, and a power supply device that can adjust the electric power supplied to the outer coil 19 (see FIG. 2).

The power supply device can adjust the electric power supplied to the outer coil 19 by controlling at least one of the current flowing through the outer coil 19 and the voltage applied to the outer coil 19 as a control target.

In an example, the method of inductively heating the outer ring 2 is performed by the outside heating process (radially outer heating process), which is the single heating process. In the outside heating process, as shown in FIG. 3, in a state in which the outer coil 19 is located radially outward of the outer ring 2, and no induction heating coil is located radially inward of the outer ring 2, the outer ring 2 is inductively heated from the radially outer side by energizing the outer coil 19. That is, by energizing the outer coil 19, which is located radially outward of the outer ring 2, an eddy current is generated in the radial outer portion of the outer ring 2, thereby heating the outer ring 2 from the radially outer side. The radial outer portion of the outer ring 2 is heated by the eddy current, and the radial inner portion of the outer ring 2 is heated by heat transfer from the radial outer portion of the outer ring 2.

The outer coil 19 is configured by, for example, winding a conductive wire spirally with a constant outer diameter in the axial direction, or by bending a conductive material into an annular shape with a constant outer diameter in the axial direction, but is not limited thereto.

In an example, the inner circumferential surface of the outer coil 19 and the outer circumferential surface of the outer ring 2 are located in close proximity and facing each other. The distance between the inner circumferential surface of the outer coil 19 and the outer circumferential surface of the outer ring 2 is not particularly limited, as long as an eddy current can be generated in the radial outer portion of the outer ring 2, but for example, it can be about 1% to 30% of the outer diameter of the outer ring 2. The numerical values described above are examples only and are not limited to those described above.

The size relationship between the axial dimension (effective length) of the outer coil 19 and the axial dimension of the outer ring 2 can be arbitrarily set as long as an eddy current can be generated in the radial outer portion of the outer ring 2. However, from the viewpoint of efficiently performing induction heating of the outer ring 2, it is preferable that the axial dimension of the outer coil 19 be larger than the axial dimension of the outer ring 2. The axial dimension of the outer coil 19 is not limited to this, but for example, it can be approximately 110% to 150% of the axial dimension of the outer ring 2. In an example, the axial dimension of the outer coil 19 is set to approximately 110% of the axial dimension of the outer ring 2. The numerical values described above are examples only and are not limited to those described above.

In an example, the axial center portion of the outer coil 19 and the axial center portion of the outer ring 2 are located at the same axial position relative to each other. However, as long as an eddy current can be generated in the radial outer portion of the outer ring 2, the axial center portion of the outer coil 19 and the axial center portion of the outer ring 2 can be located at axially offset positions from each other. For example, as shown in the variant in FIG. 8, the axial center portion of the outer coil 19 can also be located axially to the other side compared to the axial center portion of the outer ring 2. Accordingly, by intensively inductively heating the other side portion of the outer ring 2 in the axial direction, where the radial thickness is relatively large and therefore the temperature does not rise easily, the temperature of the outer ring 2 can be efficiently increased.

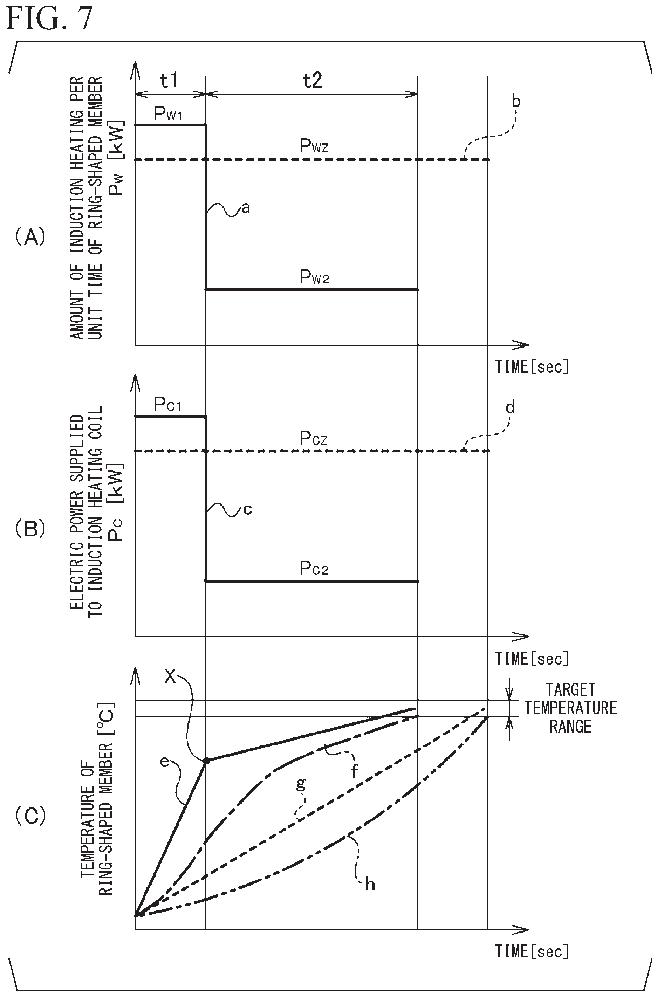

Throughout the entire time zone of the outside heating process, an operation is implemented to stepwise or continuously reduce the amount of induction heating per unit time of the outer ring 2. For example, in the outside heating process, the aspect that reduces the amount of induction heating per unit time of the outer ring 2 is limited to a stepwise decreasing aspect only. Specifically, the aspect that reduces the amount of induction heating per unit time of the outer ring 2 is an aspect that stepwise decreases only once, as shown by a solid line a in FIG. 7(A). That is, the amount of induction heating P_{W} per unit time of the outer ring 2 is changed in two stages: an amount of induction heating P_{W1} per unit time of the outer ring 2 is increased in the first stage, which is a first half, and an amount of induction heating P_{W2} per unit time of the outer ring 2 is decreased in a second stage, which is a second half.

A broken line b in FIG. 7(A) shows the amount of induction heating P_{WZ} (constant value) per unit time of the outer ring 2 when performing a standard outside heating process (conventional method). The amount of induction heating P_{W1} per unit time of the outer ring 2 in the first stage is made greater than the amount of standard induction heating P_{WZ}, and the amount of induction heating P_{W2} per unit time of the outer ring 2 in the second stage is made smaller than the amount of standard induction heating P_{WZ}.

For example, in the outside heating process, by maintaining the relative positional relationship between the outer ring 2 and the outer coil 19, the distance between the outer circumferential surface of the outer ring 2 and the inner circumferential surface of the outer coil 19, which corresponds to the interval between the outer ring 2 and the outer coil 19, is not changed.

In the outside heating process, as shown by a solid line c in FIG. 7(B), based on changing the electric power Pc supplied to the outer coil 19 by the power supply device, the amount of induction heating P_{W} per unit time of the outer ring 2 is changed in two stages. Specifically, in the first stage, the electric power P_{C1} supplied to the outer coil 19 is increased, and in the second stage, the electric power P_{C2} supplied to the outer coil 19 is decreased, thereby changing the amount of induction heating P_{W} per unit time of the outer ring 2 in two stages, as shown by the solid line a in FIG. 7(A).

A broken line d in FIG. 7(B) indicates the electric power P_{CZ} (constant value) supplied to the outer coil 19 when performing the standard outside heating process (conventional method). In the first stage, the electric power P_{C1} supplied to the outer coil 19 is made greater than the standard electric power P_{CZ}, and in the second stage, the electric power P_{C2} supplied to the outer coil 19 is made less than the standard electric power Pcz.

A solid line e in FIG. 7(C) indicates the temperature change of the outer circumferential surface (the cylindrical surface portion 9) of the outer ring 2. A dash-dot line f in FIG. 7(C) indicates the temperature change of the inner circumferential surface (the cylindrical surface portion 7) of the outer ring 2. A broken line g in FIG. 7(C) shows the temperature change of the outer circumferential surface (the cylindrical surface portion 9) of the outer ring 2 when performing the standard outside heating process. A two-dotted chain line h in FIG. 7(C) shows the temperature change of the inner circumferential surface (the cylindrical surface portion 7) of the outer ring 2 when performing the standard outside heating process.

As described above, by making the amount of induction heating P_{W1} per unit time of the outer ring 2 in the first stage greater than the amount of standard induction heating P_{WZ}, the temperature rise of the radial outer portion of the outer ring 2, including the outer circumferential surface (the cylindrical surface portion 9) of the outer ring 2, i.e., the portion heated by the generation of eddy current, is promoted, as shown by the solid line e in FIG. 7(C). Accordingly, the temperature difference between the radial outer portion and the radial inner portion of the outer ring 2 can be increased. For this reason, according to Fourier's law, the amount of heat transferred per unit time from the radial outer portion to the radial inner portion of the outer ring 2 increases, and as shown by the dash-dot line f in FIG. 7(C), the temperature rise of the radial inner portion of the outer ring 2, including the inner circumferential surface (the cylindrical surface portion 7) of the outer ring 2, is promoted.

In addition, by making the amount of induction heating P_{W2} per unit time of the outer ring 2 in the second stage smaller than the amount of standard induction heating P_{WZ}, the radial outer portion of the outer ring 2, including the outer circumferential surface (the cylindrical surface portion 9) of the outer ring 2, is prevented from being excessively heated, as shown by the solid line e in FIG. 7(C), and the entire outer ring 2 is efficiently heated towards the target temperature range.

As a result, this prevents deterioration of the quality of the radial outer portion of the outer ring 2, and, as shown in FIG. 7(C), shortens the time it takes for the entire outer ring 2 to reach the target temperature range.

Further, the ratio P_{W1}:P_{W2} between the amount of induction heating P_{W1} per unit time of the outer ring 2 in the first stage and the amount of induction heating P_{W2} per unit time of the outer ring 2 in the second stage is not particularly limited and can be set arbitrarily, for example, 2:1, 3:1, 4:1, etc. Specifically, the ratio P_{W1}:P_{W2} can be appropriately set by conducting experiments or simulations in advance, taking into account the type of steel of the target outer ring 2, the temperature of the portion of the outer ring 2 that reaches the highest temperature during induction heating, and the duration of that temperature range, in order to prevent the portion from being overheated. The numerical values described above are examples only and are not limited to those described above.

In addition, a ratio t1:t2 between an induction heating time t1 of the outer ring 2 in the first stage and an induction heating time t2 in the second stage is not particularly limited and can be set to, for example, an inverse ratio to the ratio P_{W1}:P_{W2}. Specifically, if the ratio P_{W1}:P_{W2} is 2:1, then the ratio tl:t2 can be 1:2; if the ratio P_{W1}:P_{W2} is 3:1, then the ratio t1:t2 can be 1:3; and if the ratio P_{W1}:P_{W2} is 4:1, then the ratio t1:t2 can be 1:4. The numerical values described above are examples only and are not limited to those described above.

The specific values of the parameters P_{W1}, P_{W2}, t1, and t2 can be appropriately set in advance through experiments and simulations, along with the above-mentioned ratio P_{W1}:P_{W2}, in order to properly perform induction heating of the outer ring 2 serving as the target. The numerical values described above are examples only and are not limited to those described above.

In this case, specifically, for the outer ring 2, serving as the target, the specific values of the parameters P_{W1}, P_{W2}, t1, and t2 can be determined so as to prevent the radial outer portion of the outer ring 2 from being excessively heated during the induction heating of the first stage.

Additionally, for the outer ring 2, serving as the target, the specific values of the parameters P_{W1}, P_{W2}, t1, and t2 can be determined so that the overall temperature rise of the outer ring 2 saturates within the target temperature range during the induction heating of the second stage. In this case, the end of the second stage can be defined as the point in time after a predetermined time has elapsed since the overall temperature of the outer ring 2 reached the target temperature range. Further, after the overall temperature rise of the outer ring 2 reaches the target temperature range, the electric power supplied to the outer coil 19 can be further reduced stepwise or continuously to maintain the overall temperature of the outer ring 2 within the target temperature range.

In addition, the specific values of the parameters PW1, PW2, t1, and t2 can also be adjusted according to the ambient temperature during induction heating of the outer ring 2.

In addition, to prevent the radial outer portion of the outer ring 2 from being excessively heated during the induction heating of the first stage, the amount of induction heating P_{W1} per unit time of the outer ring 2 in the first stage can be made as large as possible, thereby bringing the temperature of the outer circumferential surface (the cylindrical surface portion 9) of the outer ring 2 (the temperature at a point X in FIG. 7(C)) to the target temperature range at the end of the induction heating of the first stage, and the amount of induction heating P_{W2} per unit time of the outer ring 2 in the second stage can be set so that the temperature of the outer circumferential surface (the cylindrical surface portion 9) of the outer ring 2 is maintained within the target temperature range during the induction heating of the second stage.

In another example shown in FIG. 9, the method of inductively heating the outer ring 2 is performed by an inside heating process (RADIALLY INNER HEATING PROCESS), which is a single heating process. In the example of FIG. 9, when induction heating is performed on the outer ring 2, the induction heating coil 18 is located radially inward of the outer ring 2.

The induction heating apparatus includes an inner coil (inner diameter-side induction heating coil) 20 as the induction heating coil 18, and a power supply device that can adjust the electric power supplied to the inner coil 20.

The power supply device can adjust the electric power supplied to the inner coil 20 by controlling at least one of the current flowing through the inner coil 20 and the voltage applied to the inner coil 20 as a control target.

In an example, the single heating process is the inside heating process (RADIALLY INNER HEATING PROCESS). In the inside heating process, as shown in FIG. 9, in a state in which the inner coil 20 is located radially inward of the outer ring 2, and no induction heating coil is located radially outward of the outer ring 2, the outer ring 2 is inductively heated from the radially inner side by energizing the inner coil 20. That is, by energizing the inner coil 20, which is located radially inward of the outer ring 2, an eddy current is generated in the radial inner portion of the outer ring 2, and the outer ring 2 is heated from the radially inner side. The radial inner portion of the outer ring 2 is heated by the eddy current, and the radial outer portion of the outer ring 2 is heated by heat transfer from the radial inner portion of the outer ring 2.

The inner coil 20 is configured, for example, by winding a conductive wire spirally with a constant inner diameter in the axial direction, or by bending a conductive material into an annular shape with a constant inner diameter in the axial direction, but is not limited thereto.

In an example, the outer circumferential surface of the inner coil 20 and the cylindrical surface portion 7 provided on the inner circumferential surface of the outer ring 2 are located in close proximity and facing each other. The distance between the outer circumferential surface of the inner coil 20 and the cylindrical surface portion 7 of the outer ring 2 is not particularly limited, as long as an eddy current can be generated in the radial inner portion of the outer ring 2, but for example, it can be about 1% to 30% of the inner diameter of the cylindrical surface portion 7 of the outer ring 2. The numerical values described above are examples only and are not limited to those described above.

The size relationship between the axial dimension (effective length) of the inner coil 20 and the axial dimension of the outer ring 2 can be arbitrarily set, as long as it is possible to generate an eddy current in the radial inner portion of the outer ring 2. However, from the viewpoint of efficiently performing the induction heating of the outer ring 2, it is preferable that the axial dimension of the inner coil 20 be larger than the axial dimension of the outer ring 2. The axial dimension of the inner coil 20 is not limited to this, but for example, it can be approximately 110% to 150% of the axial dimension of the outer ring 2. In an example, the axial dimension of the inner coil 20 is set to be approximately 110% of the axial dimension of the outer ring 2. The numerical values described above are examples only and are not limited to those described above.

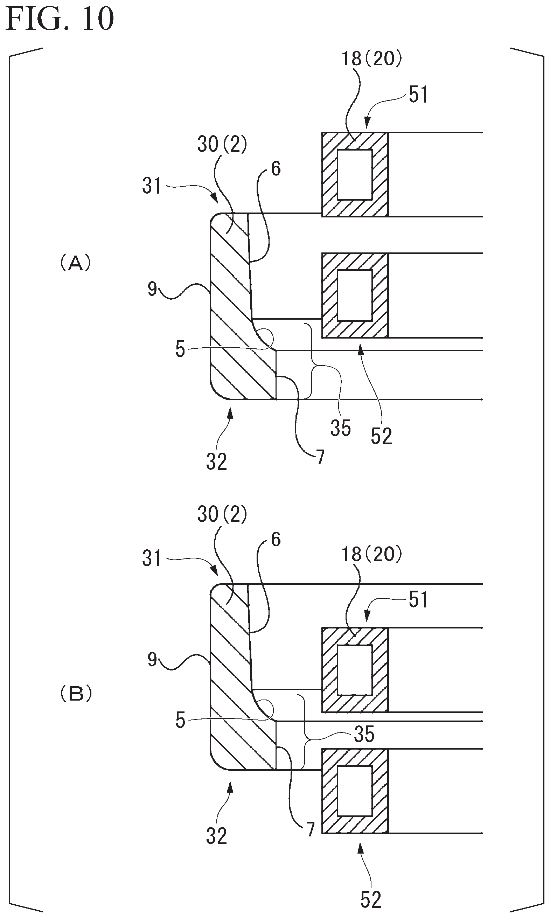

In an example, the axial center portion of the inner coil 20 and the axial center portion of the outer ring 2 are located at the same axial position relative to each other. However, as long as an eddy current can be generated in the radial inner portion of the outer ring 2, the axial center portion of the inner coil 20 and the axial center portion of the outer ring 2 can be located at axially offset positions from each other. For example, as shown in a variant in FIG. 10(A), the axial center portion of the inner coil 20 can also be located so that it is shifted axially one side from the axial center portion of the outer ring 2. Accordingly, by widening the interval between the cylindrical surface portion 7, which is located furthest inward in the radial direction of the inner circumferential surface of the outer ring 2, and the inner coil 20, it is possible to induce heating of the entire radial inner portion of the outer ring 2 almost uniformly by the eddy current. Alternatively, as shown in a variant of FIG. 10(B), the axial center portion of the inner coil 20 can also be located so that it is axially offset to the other side compared to the axial center portion of the outer ring 2. Accordingly, by intensively inductively heating the axially other side portion of the outer ring 2, which is relatively difficult to raise in temperature due to its large radial thickness, the temperature of the outer ring 2 can be efficiently increased.

In the inside heating process, as shown by the solid line a in FIG. 7(A), the number of times the amount of induction heating P_{W} per unit time of the outer ring 2 is stepwise reduced is defined as 1. That is, the amount of induction heating P_{W} per unit time of the outer ring 2 is changed in two stages: the amount of induction heating P_{W1} per unit time of the outer ring 2 is increased in the first stage (first half), and the amount of induction heating P_{W2} per unit time of the outer ring 2 is decreased in the second stage (second half).

For example, in the inside heating process, by maintaining the relative positional relationship between the outer ring 2 and the inner coil 20, the distance between the cylindrical surface portion 7 of the outer ring 2 and the outer circumferential surface of the inner coil 20, which corresponds to the interval between the outer ring 2 and the inner coil 20, is not changed.

In the inside heating process, as shown by the solid line c in FIG. 7(B), based on changing the electric power PC supplied to the inner coil 20 by the power supply device, the amount of induction heating P_{W} per unit time of the outer ring 2 is changed in two stages. Specifically, in the first stage, the electric power P_{C1} supplied to the inner coil 20 is increased, and in the second stage, the electric power P_{C2} supplied to the inner coil 20 is decreased, thereby changing the amount of induction heating P_{W} per unit time of the outer ring 2 in two stages, as shown by the solid line a in FIG. 7(A).

For example, in the first stage, the electric power P_{C1} supplied to the inner coil 20 is made greater than the electric power P_{CZ} in the conventional method, and in the second stage, the electric power P_{C2} supplied to the inner coil 20 is made smaller than the electric power P_{CZ} in the conventional method.

Even in this case, this prevents deterioration of the quality of the radial inner portion of the outer ring 2, and shortens the time it takes for the entire outer ring 2 to reach the target temperature range. Other configurations and effects are the same as in the example in FIG. 3.

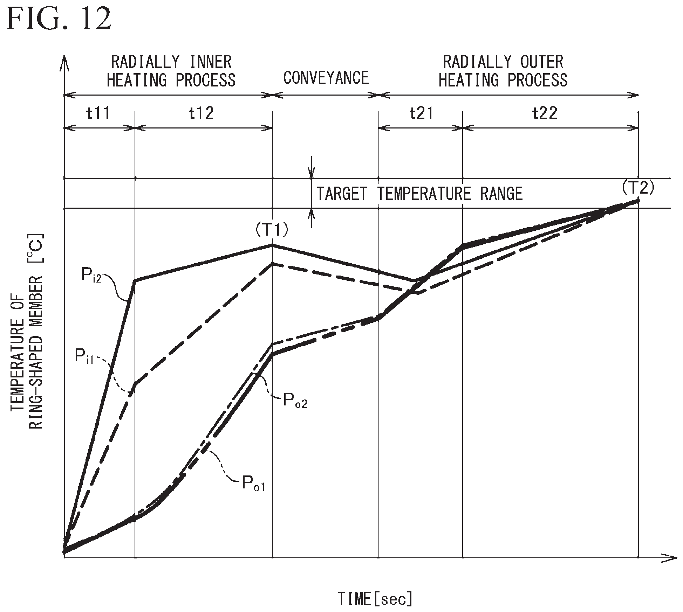

In another example shown in FIG. 11 and FIG. 12, the method for inductively heating the outer ring 2 includes a first-side heating process and a second-side heating process, which are performed independently of each other, and are carried out in the order of the first-side heating process followed by the second-side heating process.

In an example, the inside heating process is performed first, followed by the outside heating process. In another example, the outside heating process is performed first, followed by the inside heating process.

The induction heating apparatus includes the inner coil 20, the outer coil 19, and the power supply device capable of individually adjusting the electric power supplied to the inner coil 20 and the electric power supplied to the outer coil 19.

In the inside heating process, like the example of FIG. 9, as shown in FIG. 11(A), in a state in which the inner coil 20 is located radially inward of the outer ring 2 and no induction heating coil is located radially outward of the outer ring 2, the outer ring 2 is inductively heated from the radially inner side by energizing the inner coil 20. Further, in the inside heating process, the induction heating time of the outer ring 2 in the first stage is represented as t11, and the induction heating time in the second stage is represented as t12 (see FIG. 12).

In addition, in the inside heating process, in a similar method to the example in FIG. 9, as shown by the solid line a in FIG. 7(A), the amount of induction heating P_{W} per unit time of the outer ring 2 is changed in two stages: the amount of induction heating P_{W1} per unit time of the outer ring 2 is increased in the first stage (first half), and the amount of induction heating P_{W2} per unit time of the outer ring 2 is decreased in the second stage (second half).

However, by adjusting the electric power P_{C} supplied to the inner coil 20 by the power supply device, at the end of the inside heating process, the temperature of the entire outer ring 2 is raised only to a temperature lower than the target temperature range.

The outer ring 2 is heated for a predetermined time in the inside heating process, and then conveyed to the outside heating process.

In the outside heating process, similar to the example in FIG. 3, as shown in FIG. 11(B), in a state in which the outer coil 19 is located radially outward of the outer ring 2 and no induction heating coil is located radially inward of the outer ring 2, the outer ring 2 is inductively heated from the radially outer side by energizing the outer coil 19. Further, in the outside heating process, the induction heating time of the outer ring 2 in the first stage is represented as t21, and the induction heating time in the second stage is represented as t22 (see FIG. 12).

In addition, in the outside heating process, in a similar method to the example in FIG. 3, as shown by the solid line a in FIG. 7(A), the amount of induction heating P_{W} per unit time of the outer ring 2 is changed in two stages: the amount of induction heating P_{W1} per unit time of the outer ring 2 is increased in the first stage (first half), and the amount of induction heating P_{W2} per unit time of the outer ring 2 is decreased in the second stage (second half).

Accordingly, the temperature of the overall outer ring 2 is raised to a temperature (T2) within the target temperature range.

In an example, when inductively heating the outer ring 2, the inside heating process and the outside heating process are carried out independently of each other. In this case, the heating condition in the inside heating process, which induces heating of the outer ring 2 from the radially outer side, and the heating condition in the outside heating process, which induces heating of the outer ring 2 from the radially outer side, are controlled independently. For this reason, the heating state of the outer ring 2 is easy to control. That is, by appropriately setting the heating condition in the inside heating process and the heating condition in the outside heating process, the entire outer ring 2 can be heated substantially uniformly and efficiently.

Here, in general, when induction heating is used to heat the outer or the inner ring of the rolling bearing, the following problems may occur. For example, the outer ring of the rolling bearing has an outer ring raceway on its inner circumferential surface. Accordingly, when the induction heating coil is located on the radially inner side of the outer ring, the distance between the inner circumferential surface of the outer ring and the induction heating coil varies depending on the axial position. For this reason, when current is applied to the induction heating coil, the eddy current may concentrate in the portion of the outer ring that is closer to the induction heating coil, potentially leading to concentrated induction heating of that portion. The portion of the outer ring that is farther from the induction heating coil is heated by heat transferred from the portion of the outer ring that is closer to the induction heating coil. For this reason, the axial position of the outer ring can significantly affect the rate of heating, potentially making it difficult to heat the entire outer ring uniformly. If hardening treatment and tempering treatment are performed while the internal temperature of the outer ring remains uneven, it may result in uneven hardness in the cross-section of the ring-shaped member, potentially failing to meet the required quality standards. To avoid this problem, reducing the electric power supplied to the induction heating coil and increasing the heating time of the outer ring would minimize the difference in the heating rate of the outer ring depending on the axial position. However, this would lead to a decrease in productivity and is therefore undesirable.

On the other hand, in an example of FIG. 11, in the inside heating process, the outer ring 2 is inductively heated by the inner coil 20, which is located opposite the inner circumferential surface of the outer ring 2, the surface height of which varies relatively. After that, in the outside heating process, the outer ring 2 is inductively heated by the outer coil 19, which is located opposite the outer circumferential surface of the outer ring 2, the surface height of which is relatively uniform.

In the inside heating process, by increasing the electric power supplied to the inner coil 20 by the power supply device, the temperature of the inner circumferential surface (Pᵢ₂ (see FIG. 11 (A))) of the end portion of the outer ring 2 on the other side in the axial direction, where the radial thickness is large, rises rapidly to a first predetermined temperature T1 near the target temperature range, as schematically shown in FIG. 12.

For example, in the inside heating process, in the inner circumferential surface of the outer ring 2, a temperature rise amount of an end portion Pᵢ₂ on the other side in the axial direction, which is closer to the inner coil 20, is greater than a temperature rise amount of an end portion Pᵢ₁ on the one side in the axial direction, which is farther from the inner coil 20. Meanwhile, a temperature rise amount of an end portion Pₒ₂ on the other side of the outer circumferential surface of the outer ring 2 in the axial direction is approximately equal to a temperature rise amount of an end portion Pₒ₁ on one side of the outer circumferential surface of the outer ring 2 in the axial direction.

In the outside heating process, when heating the outer ring 2 from the radial outer portion, which has a constant outer diameter except for the end portions on both sides in the axial direction, the power supply device adjusts the electric power supplied to the outer coil 19 and also adjusts the heating time. Accordingly, as schematically shown in FIG. 12, the entire outer ring 2 is heated substantially uniformly to a second predetermined temperature T2 (a temperature within the target temperature range) that is higher than the first predetermined temperature T1. For example, the temperature of each portion of the outer ring 2 can be raised to the second predetermined temperature T2 at approximately the same timing.

The heating conditions in the inside heating process and the heating conditions in the outside heating process can be determined in advance through experiments or simulations. The heating time (t21+t22) in the outside heating process relative to the heating time (t11+t12) in the inside heating process can be, for example, 50% to 200%, and preferably 80% to 120%, depending on the radial thickness of the outer ring 2, etc. The current value supplied to the outer coil 19 in the outside heating process relative to the current value supplied to the inner coil 20 in the inside heating process can be, for example, 50% to 200%, and preferably 80% to 120%, depending on the radial thickness of the outer ring 2, etc. The numerical values described above are examples only and are not limited to those described above.

In an example, the first predetermined temperature T1 is set to a temperature lower than the second predetermined temperature T2. In another example, the first predetermined temperature T1 can be set to the same temperature as the second predetermined temperature T2, or the first predetermined temperature T1 can be set to a temperature higher than the second predetermined temperature T2.

For example, in the ring-shaped member serving as the target (i.e., the outer ring 2), the temperature rise amount of the end portion Pi2 becomes greater than the temperature rise amount of the end portion Pi1, and the temperature rise amount of the end portion Po2 becomes greater than the temperature rise amount of the end portion Po1. If the distribution of the radial thickness of the target ring-shaped member with respect to the axial direction differs from that of the outer ring 2, then at least one of the following magnitude relationships may be reversed: the magnitude relationship between the temperature rise amount of the end portion Pi2 and the temperature rise amount of the end portion Pi1, and the magnitude relationship between the temperature rise amount of the end portion Po2 and the temperature rise amount of the end portion Po1.

In an example, in the induction heating method of the outer ring 2, in each of the inside heating process and the outside heating process, as shown by the solid line a in FIG. 7(A), the amount of induction heating P_{W} per unit time of the outer ring 2 is changed in two stages: the amount of induction heating P_{W1} per unit time of the outer ring 2 is increased in the first stage (first half), and the amount of induction heating P_{W2} per unit time of the outer ring 2 is decreased in the second stage (second half). For this reason, for the same reasons as in the first and second examples, deterioration of the quality of the outer ring 2 can be prevented, and the time it takes for the entire outer ring 2 to reach the target temperature range can be shortened compared to the conventional method. Other configurations and effects are the same as in the example in FIG. 3 and the example in FIG. 9.

Further, the induction heating method described above can also be applied to the inner ring 3 of the radial rolling bearing 1 shown in FIG. 1.

The examples of the embodiments described above can be combined and implemented as appropriate, as long as they do not create contradictions. In addition, in the examples of the embodiments described above, while the case in which one ring-shaped member is inductively heated using the ring-shaped member induction heating method of the present disclosure was described, the ring-shaped member induction heating method of the present disclosure can also be applied to a plurality of ring-shaped members (for example, a plurality of ring-shaped members arranged in the axial direction).

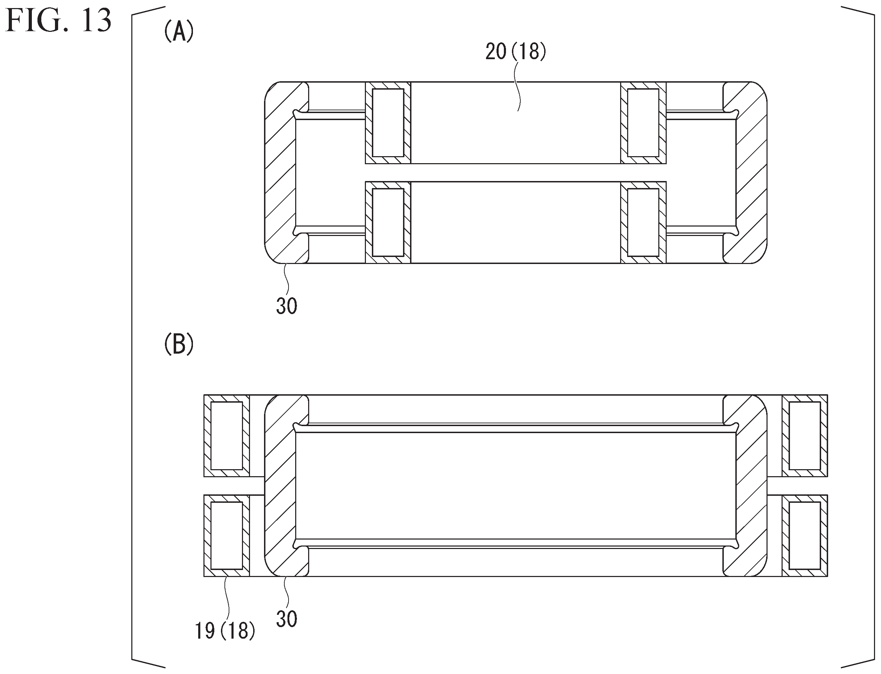

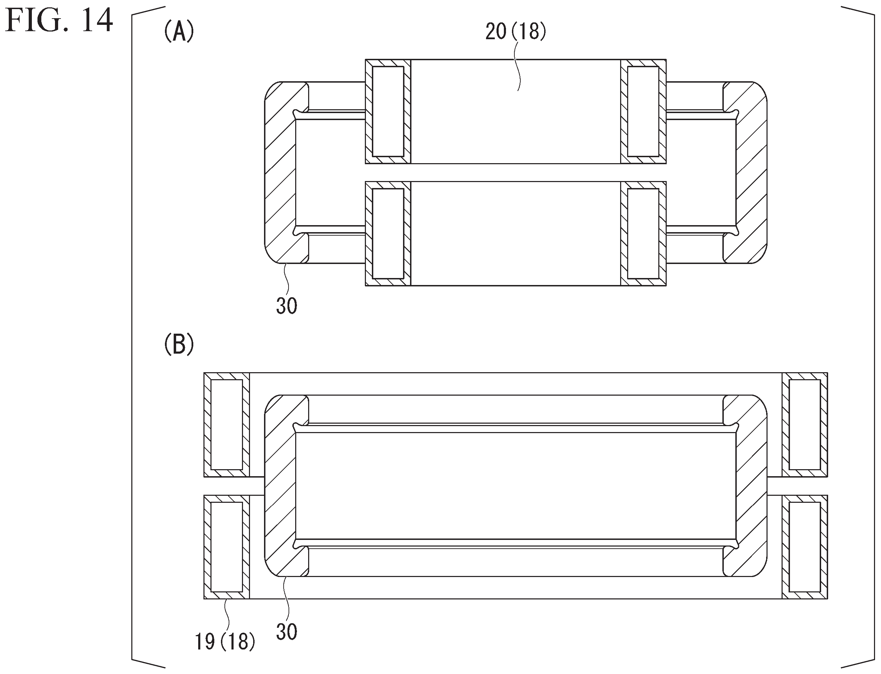

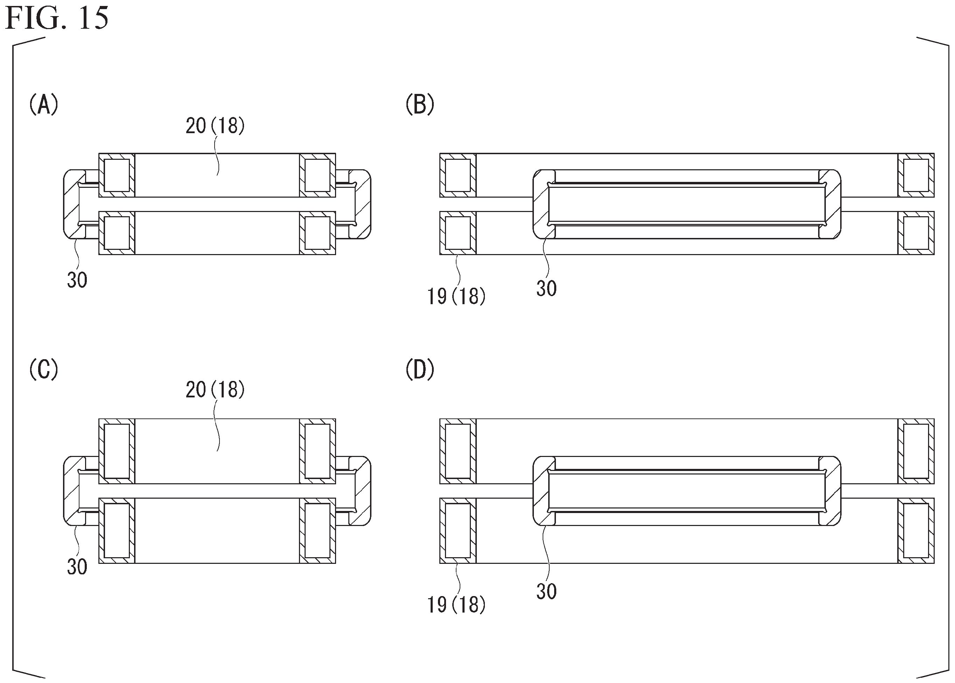

In the examples shown in FIG. 13, FIG. 14, and FIG. 15, the ring-shaped member 30 has a thickness distribution of the circumferential wall in which the wall thickness near both ends in the axial direction is greater than that of the axial center portion. The thickness distribution of the circumferential wall is substantially symmetric or approximately symmetric with respect to the axial center. In the example of FIG. 13, the effective length of the induction coil 18 is approximately the same as the axial length of the ring-shaped member 30. In the examples of FIG. 14 and FIG. 15, the effective length of the induction coil 18 is greater than the axial length of the ring-shaped member 30. In each example, the induction heating method described above is applied. In another example, as shown in FIG. 16, the induction heating method described above can be applied to multiple ring-shaped members of various shapes. The heat treatment using a highly versatile induction coil is advantageous in reducing manufacturing costs.

In an example, an additional core member made of magnetic material is provided. For example, the core member is provided inside the inner coil (near the inner circumferential surface) and/or near both axial end surfaces of the inner coil. In addition, the core member is located on the outside of the outer coil (near the outer circumferential surface) and near both axial end surfaces of the outer coil. The installation of the core member improves heating efficiency.

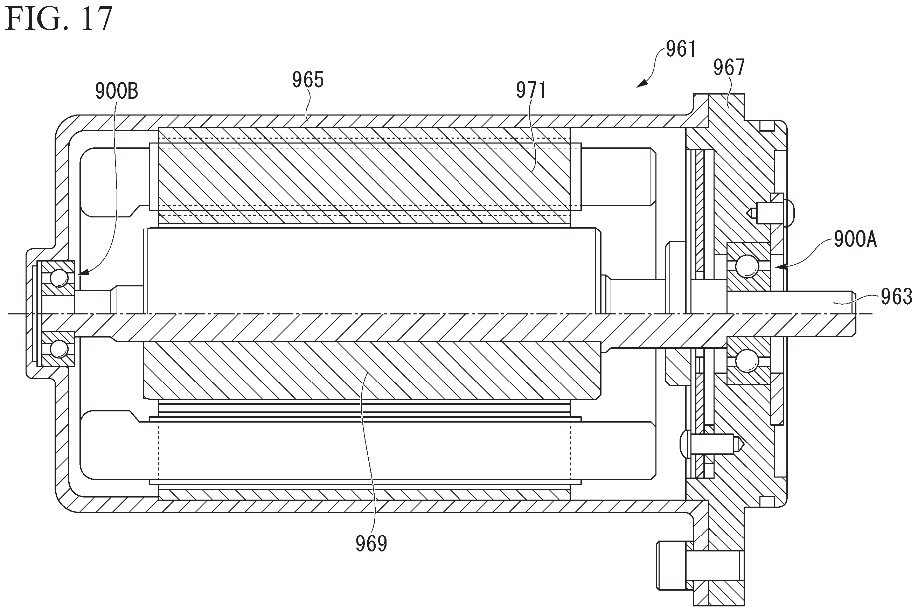

The ring-shaped member can be applied, for example, to bearings 900A, 900B, etc., that support a rotary shaft 963 of a motor 961 shown in FIG. 17.

In FIG. 17, the motor 961 is a brushless motor and has a cylindrical center housing 965 and a substantially disc-shaped front housing 967 that closes one open end portion of the center housing 965. Inside the center housing 965, the rotatable rotary shaft 963 is supported along its axis via the bearings 900A and 900B, which are located in the front housing 967 and the bottom portion of the center housing 965. A rotor 969 for driving a motor is provided around the rotary shaft 963, and a stator 971 is fixed to an inner circumferential surface of the center housing 965.

The motor 961 is typically mounted on a machine or a vehicle and rotates the rotary shaft 963, which is supported by the bearings 900A and 900B.

In the mechanical equipment and/or the vehicle, the bearing is used where relative rotation occurs between the first member and the second member. In an example, the mechanical equipment includes a device body having a frame member and/or a base member, and a rotating part provided on the device body. The rotating part includes a support body, a bearing supported by the support body, and a rotating body (shaft or the like) rotatably supported by the support body via the bearing. For example, the mechanical equipment includes a motor. In an example, the vehicle includes a vehicle main body having a frame member and/or a base member, and a rotating part provided on the vehicle main body. The rotating part includes a support body, a bearing supported by the support body, and a rotating body (shaft or the like) rotatably supported by the support body via the bearing. For example, the vehicle may include mechanical equipment having a motor, and/or a rotating part.

A bearing element or bearing can be applied to a rotational support portion of: machines with rotating parts; various manufacturing equipment; and linear motion devices such as screw devices (e.g., ball screw devices) and actuators (e.g., combinations of linear motion guide bearings and ball screws, XY tables, etc.). In addition, the bearing element or bearing can be applied to steering devices such as wipers, power windows, electric doors, electric seats, steering columns (for example, electric tilt-telescopic steering columns), universal joints, intermediate gears, rack and pinion, electric power steering systems, and worm gear reducers. Further, the bearing element or bearing is applicable to various vehicles such as automobiles, motorcycles, and trains. This bearing configuration can be suitably applied to parts that rotate relative to each other, leading to improved product quality and reduced costs.

The technical scope of the present invention is not limited to the scope described in the embodiment. It is possible to make various modifications or improvements to this embodiment. Such modified or improved forms may also fall within the technical scope of the present invention. In addition, the configuration is not limited to the embodiments described, and any arbitrary combination of these configurations is also acceptable.

### REFERENCE SIGNS LIST

1 Radial rolling bearing
2 Outer ring
3 Inner ring
4 Rolling element
5 Outer ring raceway
6 Inclined surface portion
7 Cylindrical surface portion
8a, 8b Chamfered portion
9 Cylindrical surface portion
10a, 10b Chamfered portion
11 Inner ring raceway
12 Inclined surface portion
13 Cylindrical surface portion
14a, 14b Chamfered portion
15 Cylindrical surface portion
16a, 16b Chamfered portion
18 Induction heating coil (induction coil)
19 Outer coil (outer diameter-side induction heating coil)
20 Inner coil (inner diameter-side induction heating coil)
30 Ring-shaped member
200 Induction heating apparatus

## Claims

1. A ring-shaped member induction heating method comprising:
an induction heating process of heating a ring-shaped member using an induction coil,
wherein the induction heating process comprises:
an outside heating process of applying induction heating to the ring-shaped member using an outer coil as the induction coil located radially outward of the ring-shaped member in a state in which there is no substantial coil located radially inward of the ring-shaped member; and
an inside heating process of applying induction heating to the ring-shaped member using an inner coil as the induction coil located radially inward of the ring-shaped member in a state in which there is no substantial coil located radially outward of the ring-shaped member; and
at least one of the outside heating process and the inside heating process includes a process of reducing an amount of heating applied to the ring-shaped member by induction heating over time.

2. The induction heating method according to claim 1, wherein the process of reducing the amount of heating includes at least one of reducing the amount of heating in one or more stages, or reducing the amount of heating continuously.

3. The induction heating method according to claim 1 or 2, wherein the amount of heating in the outside heating process decreases over time, and then, the inside heating process is performed, or
the amount of heating in the inside heating process decreases over time, and then, the outside heating process is performed.

4. The induction heating method according to any one of claims 1 to 3, further comprising a conveying process of conveying the ring-shaped member between the outside heating process and the inside heating process.

5. The induction heating method according to any one of claims 1 to 4, wherein the process of reducing the amount of heating includes controlling at least one of current, voltage, and a positional relationship between the induction coil and the ring-shaped member.

6. The induction heating method according to any one of claims 1 to 5, wherein the induction heating process includes applying hardening treatment, tempering treatment, annealing treatment, or normalizing treatment to the ring-shaped member based on the induction heating.

7. A ring-shaped member induction heating method comprising:
one or more heating processes of inductively heating a ring-shaped member using only an induction heating coil located on either side of the ring-shaped member in a heating direction, which is a radial direction or an axial direction,
wherein, in at least one heating process of the one or more heating processes, an amount of induction heating per unit time of the ring-shaped member is decreased stepwise or continuously.

8. The ring-shaped member induction heating method according to claim 7, wherein, in the at least one heating process, the amount of induction heating per unit time of the ring-shaped member is reduced by only one step.

9. The ring-shaped member induction heating method according to claim 7 or 8, wherein, in the at least one heating process, the amount of induction heating per unit time of the ring-shaped member is stepwise or continuously decreased on the basis of a decrease in electric power supplied to at least the induction heating coil.

10. The ring-shaped member induction heating method according to any one of claims 7 to 9, wherein, in the at least one heating process, the amount of induction heating per unit time of the ring-shaped member is stepwise or continuously decreased on the basis of at least an increase in interval between the ring-shaped member and the induction heating coil.

11. The ring-shaped member induction heating method according to any one of claims 7 to 10, wherein the at least one heating process comprises:
a first heating process of inductively heating the ring-shaped member from a first side in the heating direction using only a first induction heating coil as the induction heating coil located on the first side of the ring-shaped member in the heating direction; and
a second heating process of inductively heating the ring-shaped member from a second side in the heating direction using only a second induction heating coil as the induction heating coil located on the second side of the ring-shaped member in the heating direction, after the first heating process.

12. The ring-shaped member induction heating method according to any one of claims 7 to 11, wherein the heating direction is a radial direction.

13. A ring-shaped member manufacturing method comprising:
a process of processing a material to form a ring-shaped workpiece; and
a process of heat-treating the workpiece using the induction heating method according to any one of claims 1 to 12.

14. A ring-shaped member manufactured using the manufacturing method according to claim 13.

15. A bearing manufacturing method comprising:
a process of manufacturing a ring-shaped member of a bearing using the manufacturing method according to claim 14; and
a process of assembling the bearing using the ring-shaped member.

16. A bearing manufactured using the manufacturing method according to claim 15.

17. A mechanical equipment manufacturing method comprising:
manufacturing a bearing using the manufacturing method according to claim 15; and
assembling the bearing to a device body.

18. A vehicle manufacturing method comprising:
manufacturing a bearing using the manufacturing method according to claim 15; and
assembling the bearing to a vehicle main body.

19. An induction heating apparatus comprising:
a first station in which an outer coil is installed;
a second station in which an inner coil is installed;
a power supply device configured to supply current to the outer coil and the inner coil; and
a control device,
wherein, in the first station, in a state in which there is no substantial coil located radially inward of the ring-shaped member, induction heating is applied to the ring-shaped member using the outer coil as the induction coil located radially outward of the ring-shaped member,
in the second station, induction heating is applied to the ring-shaped member using the inner coil as the induction coil located radially inward of the ring-shaped member in a state in which there is no substantial coil located radially outward of the ring-shaped member, and
the control device reduces an amount of heating applied to the ring-shaped member by induction heating over time in at least one of the first station and the second station.
